# EUROPEAN PATENT APPLICATION

(11) **EP 4 819 706 A1**
(43) Date of publication of application: **07.10.2026**
(21) Application number: 24936835.8
(22) Date of filing: 31.12.2024
(51) Int. Cl.: H04W 56/00

(54) **RANGING METHOD AND APPARATUS, AND UWB DEVICE AND UWB SYSTEM**

(30) Priority: 25.04.2024 CN 202410513578; 05.07.2024 CN 202410903884; 18.07.2024 CN 202410970217; 09.09.2024 CN 202411259988; 26.09.2024 CN 202411363214
(71) Applicant: Calterah Semiconductor Technology (Shanghai) Co., Ltd., Shanghai 201210 (CN)
(72) Inventor: LI, Wenzheng, Shanghai 201210 (CN); YU, Zhongxing, Shanghai 201210 (CN); MA, Zhepeng, Shanghai 201210 (CN); XIAO, Junming, Shanghai 201210 (CN)
(74) Representative: WSL Patentanwälte Partnerschaft mbB
(86) International application number: PCT/CN2024/144612
(87) International publication number: WO 2025/222943

(57) **Abstract**

Disclosed in the present application are a ranging method and apparatus, and a UWB device and a UWB system. In the ranging method provided in the embodiments of the present application, in a ranging phase of UWB MMS ranging, a first UWB device and a second UWB device exchange, starting from a first fragment, one or more SYNC+SFD fragments, e,g., exchanging a SYNC+SFD fragment, such that SYNC and SFD are exchanged between the first UWB device and the second UWB device for UWB ranging, without affecting the performance of UWB ranging, thereby ensuring precise time synchronization and correct data frame identification, and thus ensuing the precision and reliability of UWB ranging.

## Description

### Technical Field

The present application relates to, but is not limited to, a ranging method and apparatus, and a UWB device and UWB system.

### Background

At present, Ultra-Wideband (UWB) technology is a wireless carrier communication technology that uses extremely wide frequency bandwidth. Because of its unique advantages such as wide bandwidth, high-precision positioning capability and low power consumption, the UWB technology is widely used in Internet of Things, indoor positioning, wireless data transmission, radar and other fields. The Fine Ranging Consortium (FiRa) is a consortium of companies focused on promoting development and standardization of UWB precision positioning technology. Both the FiRa protocol and the CCC (Car Connectivity Consortium) protocol include the UWB ranging process.

Both device sides in the UWB ranging system are usually referred to as a UWB device (first UWB device) and a ranging device/device (second UWB device), and are also referred to as an Initiator and a Responder in the ranging phase. In the process of UWB ranging, in order to ensure the precision and reliability for the UWB ranging, it is required to maintain time synchronization between the UWB device and the ranging device.

### Summary

In order to solve the above technical problems, a ranging method is provided in an embodiment of the present application, which includes:
transmitting, by a first UWB device performing UWB MMS ranging, one or more SYNC and SFD fragments to a second UWB device to achieve time synchronization between the first and second UWB devices.

A ranging apparatus is provided in an embodiment of the present application. The ranging apparatus includes a synchronization module configured to transmit one or more SYNC and SFD fragments from a first UWB device for UWB MMS ranging to a second UWB device to achieve time synchronization.

A UWB device is provided in an embodiment of the present application. The UWB device includes the ranging apparatus according to any one of the above items.

A UWB system is provided in an embodiment of the present application. The UWB system includes at least one first UWB device and two or more second UWB devices.

The first UWB device is configured to transmit one or more SYNC and SFD fragments, starting from a first fragment in a ranging phase of the UWB MMS ranging to achieve time synchronization with the second UWB device;

The second UWB device is configured to transmit one or more SYNC and SFD fragments, starting from a first fragment in the ranging phase of the UWB MMS ranging to achieve time synchronization with the first UWB device.

A ranging method is provided in an embodiment of the present application. The ranging method includes: setting a ranging fragment period, wherein each ranging fragment period comprises two or more sub-periods, and transmitting and receiving data using one or more UWB MMS fragments in each sub-period;
performing data transmission and reception by an initiator for ranging within a ranging fragment period, comprising:
in each sub-period, transmitting, by the initiator, data once, and receiving, by the initiator, data from some of all responders replied at different time points.

A ranging method is provided in an embodiment of the present application. The ranging method includes: setting a ranging fragment period, each ranging fragment period includes two or more sub-periods, and transmitting and receiving data with one or more UWB MMS fragments in each sub-period;
performing data transmission and reception, by a responder for the ranging, within a ranging fragment period, comprising:
in each sub-period, receiving, by all responders, data from the initiator once, and transmitting, by some of all the responders, data to the initiator once at different time points.

A ranging method is provided in an embodiment of the present application. The ranging method includes a first UWB device as an initiator for ranging and n second UWB devices as responders for ranging, n being an integer greater than or equal to 2; setting a ranging fragment period comprising two sub-periods, and transmitting and receiving data in each sub-period using one or more UWB MMS fragments;
performing data transmission and reception within a ranging fragment period comprise:
in one of the sub-periods, transmitting, by the first UWB device, data once and receiving data replied from some of the second UWB devices at different time points, receiving, by the n second UWB devices, data from the first UWB device once, and transmitting, by the some of the second UWB devices, data to the first UWB device once at different time points, and
in the other sub-period, transmitting, by the first UWB device, data once and receiving data responded from the remaining second UWB devices at different time points, receiving, by the n second UWB devices, data from the first UWB device once, and transmitting, by remaining responders, data to the first UWB device once at different time points.

A ranging apparatus is provided in an embodiment of the present application. The ranging apparatus includes a setting module and a ranging module; wherein,
in a case where the ranging apparatus is disposed at an initiator for the ranging,
the setting module is configured to set a ranging fragment period to comprise a first sub-period and a second sub-period, and transmit and receive data with one or more UWB MMS fragments in each sub-period;
the ranging module is configured to in the first sub-period, transmit data once by the initiator, and receive data replied from some responders at different time points; and in the second sub-period, transmit data once by the initiator, and receive data replied from remaining responders at different time points; wherein there are two or more responders;
in a case where the ranging apparatus is disposed at responders for the ranging,
the setting module is configured to set a ranging fragment period to comprise a first sub-period and a second sub-period, and transmit and receive data with one or more UWB MMS fragments in each sub-period;
the ranging module is configured to in the first sub-period, receive, by some responders, data from the initiator once, and transmit the data to the initiator once at different time points; and in the second sub-period, receive data, by remaining responders, from the initiator once, and transmit the data to the initiator once at different time points in time; wherein there are two or more responders.

A ranging method is provided in an embodiment of the present application. The ranging method applied to a UWB ranging system, wherein the UWB ranging system includes an initiator and a responder, and the initiator and the responder store a same plurality of short-term operating parameter sets;
during a ranging session, the initiator negotiates with the responder a same short-term operating parameter set used in at least one round of UWB ranging exchanging, wherein the UWB initiator negotiating with the responder the same short-term operating parameter set used in the at least one round of UWB ranging exchanging, includes:
the initiator indicating a short-term operating parameter set to the responder; and/or,
the response requesting an initiator for a short-term operating parameter set, or short-term operating parameters conforming to at least one short-term operating parameter set.

A ranging method is provided in an embodiment of the present application. The ranging method includes:
in a ranging control phase, negotiating, by the initiator with the responder a same short-term operating parameter set used in at least one round of UWB ranging exchanging, wherein negotiating, by the initiator, with the responder the same short-term operating parameter set used in the at least one round of UWB ranging exchanging, comprises: indicating, by the initiator, one short-term operating parameter set to the responder; and/or requesting, by the responder, the initiator for a short-term operating parameter set, or short-term operating parameters conforming to at least one short-term operating parameter set; wherein the initiator and the responder store a same plurality of short-term operating parameter sets;
wherein in a ranging phase, a first exchanging packet transmitted by the initiator to the responder carries one or more SYNC and SFD fragments to implement time synchronization between the initiator and the responder.

A ranging method is provided in an embodiment of the present application. The ranging method includes: setting a ranging fragment period, each of which includes two or more sub-periods, and transmitting and receiving data with one or more UWB MMS fragments in each sub-period;
in a ranging control phase, negotiating, by the initiator, with the responder a same short-term operating parameter set used in at least one round of UWB ranging exchanging, wherein negotiating, by the initiator, with the responder the same short-term operating parameter set used in the at least one round of UWB ranging exchanging, comprises: indicating, by the initiator, one short-term operating parameter set to the responder; and/or requesting, by the response, the initiator for a short-term operating parameter set, or short-term operating parameters conforming to at least one short-term operating parameter set.; wherein the initiator and the responder store a same plurality of short-term operating parameter sets;
wherein in a ranging phase, a first exchanging packet transmitted by the initiator to the responder carries one or more SYNC and SFD fragments to implement time synchronization between the initiator and the responder;
transmission and reception of subsequent exchanging packets in the ranging phase comprises:
   in each sub-period, transmitting, by the initiator, data once and receiving data from some of all responders replying at different time points;
      and/or,
   in each sub-period, receiving, by all the responders, data from the initiator once, and transmitting, by some of the responders, data to the initiator once at different time points.

Other features and advantages of the present application will be set forth in the description which follows, and in part will be obvious from the description, or may be learned by practice of the present application. Purposes and other advantages of the present application may be achieved and acquired by the structures particularly pointed out in the description, claims and drawings.

### Brief Description of Drawings

Accompanying drawings are used to provide a further understanding of technical solutions of the present application, and constitute a part of the specification. They are used together with the embodiments of the present application to explain the technical solutions of the present application, and do not constitute a restriction on the technical solutions of the present application.
FIG. 1 is a schematic diagram of an application scenario of the UWB technology in a vehicle.
FIG. 2 is a schematic diagram of an application scenario of BLE and UWB in CCC digital key 3.0.
FIG. 3 is a schematic diagram of link budget comparison of different ranging ways in different conditions.
FIG. 4 is a schematic diagram of a ranging round in UWB MMS ranging according to an embodiment of the present application.
FIG. 5 is a schematic diagram of UWB MMS ranging transmission according to an embodiment of the present application.
FIG. 6(a) is a schematic diagram of UWB driven MMS ranging transmission according to an embodiment of the present application.
FIG. 6(b) is a schematic diagram of OOB assisted UWB MMS ranging transmission according to an embodiment of the present application.
FIG. 7 is a schematic diagram of phases of BLE assisted UWB MMS ranging in an embodiment of the present application.
FIG. 8 illustrates schematically a flowchart of a first embodiment of the ranging method according to an embodiment of the present application.
FIG. 9 is a schematic diagram of fragment transmission in a UWB MMS ranging phase according to an embodiment of the present application.
FIG. 10 illustrates schematically a flowchart of a second embodiment of the ranging method according to an embodiment of the present application.
FIG. 11 illustrates schematically a flowchart of a third embodiment of the ranging method according to an embodiment of the present application.
FIG. 12 is a schematic diagram of a structure of a ranging apparatus according to an embodiment of the present application.
FIG. 13 is a schematic diagram of a DS-TWR process.
FIG. 14 is a schematic diagram of an ess-TWR process.
FIG. 15 is a schematic diagram of a UWB ranging process according to an embodiment of the present application.
FIG. 16 is a schematic diagram of an MMS format according to an embodiment of the present application.
FIG. 17 is a schematic diagram of transmitting and receiving packets in a DS-TWR based UWB ranging process according to an embodiment of the present application.
FIG. 18 illustrates schematically a flowchart of a ranging method according to an embodiment of the present application.
FIG. 19 illustrates schematically a flowchart of another ranging method according to an embodiment of the present application.
FIG. 20 illustrates schematically a flowchart of yet another ranging method according to an embodiment of the present application.
FIG. 21(a) is a schematic diagram of a process of transmitting and receiving data in one ranging round involving four anchors in an embodiment of the present application.
FIG. 21(b) is a schematic diagram of a process of transmitting and receiving data in one ranging round involving two anchors in an embodiment of the present application.

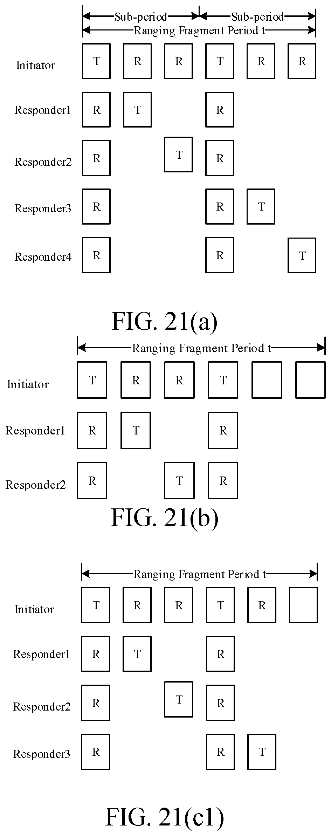

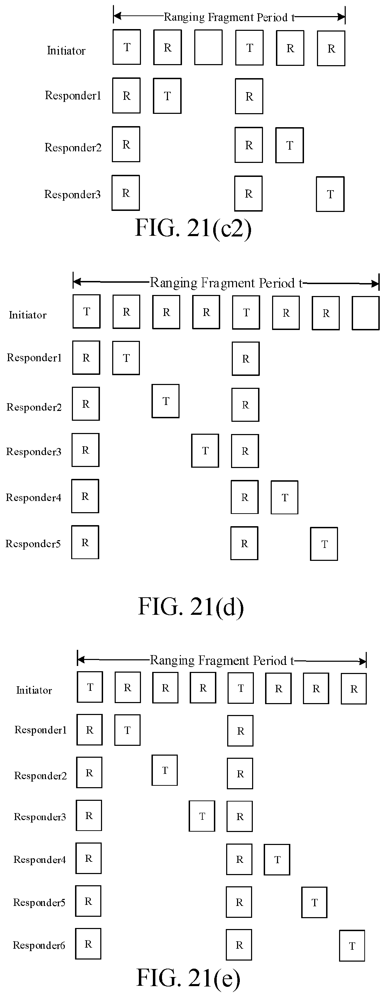

FIG. 21(c1) is a schematic diagram of a process of transmitting and receiving data in one ranging round involving three anchors in an embodiment of the present application.
FIG. 21(c2) is a schematic diagram of another process of transmitting and receiving data in one ranging round involving three anchors in an embodiment of the present application.
FIG. 21(d) is a schematic diagram of a process of transmitting and receiving data in one ranging round involving five anchors in an embodiment of the present application.
FIG. 21(e) is a schematic diagram of a process of transmitting and receiving data in one ranging round involving six anchors in an embodiment of the present application.

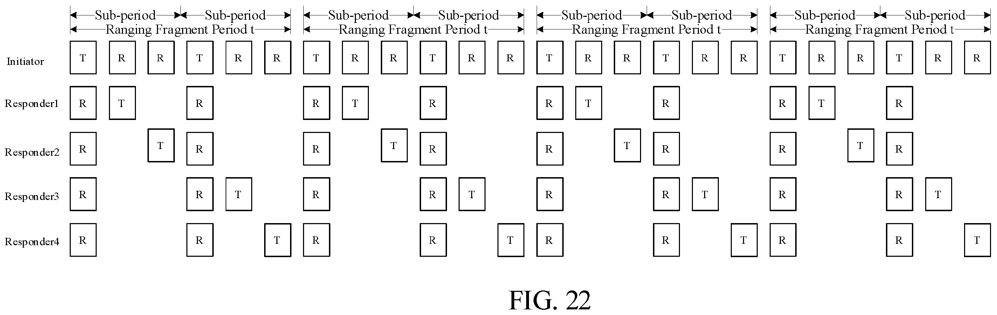

FIG. 22 is a schematic diagram of a process of transmitting and receiving data for a plurality of times in an embodiment of the present application.

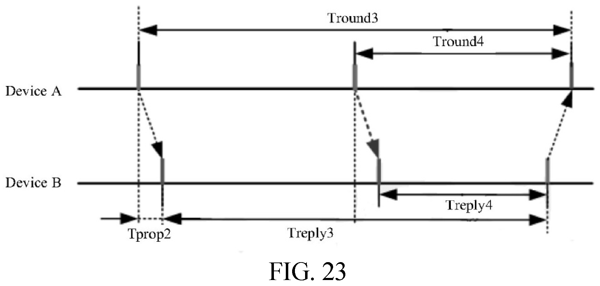

FIG. 23 is a schematic diagram of transmitting and receiving ranging data by using a data transmission and reception mode of TxTxRx-RxRxTx according to an embodiment of the present application.

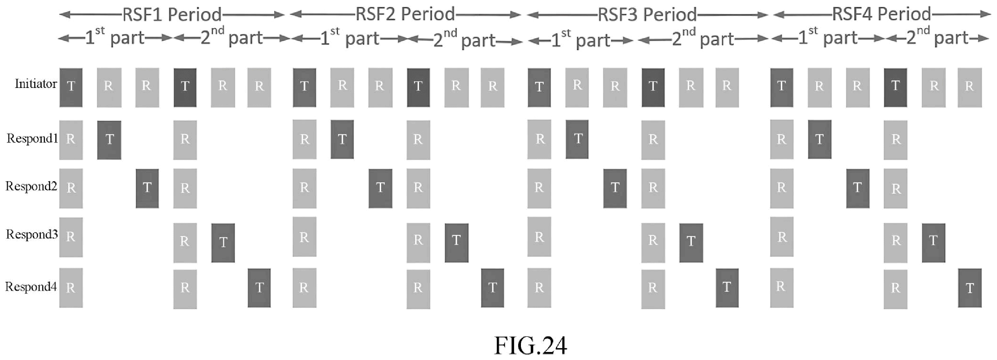

FIG. 24 is a schematic diagram of DS-TWR one-to-many MMS ranging based on RSF according to an embodiment of the present application.

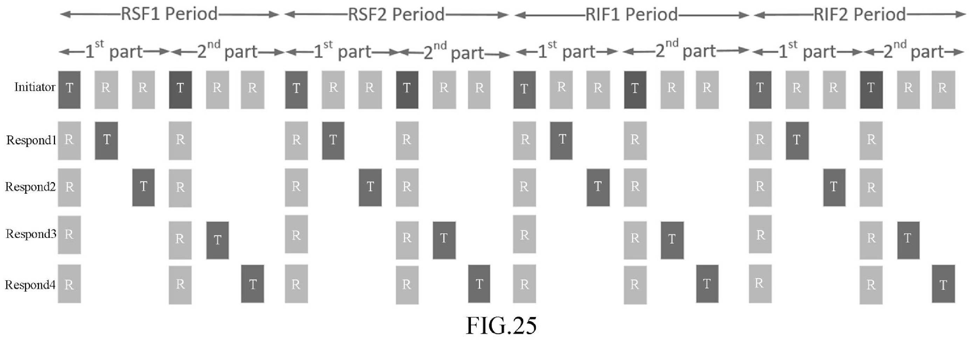

FIG. 25 is a schematic diagram of Double-Sided Two-Way Ranging (DS-TWR) one-to-many MMS ranging based on RSF and RIF in an embodiment of the present application.

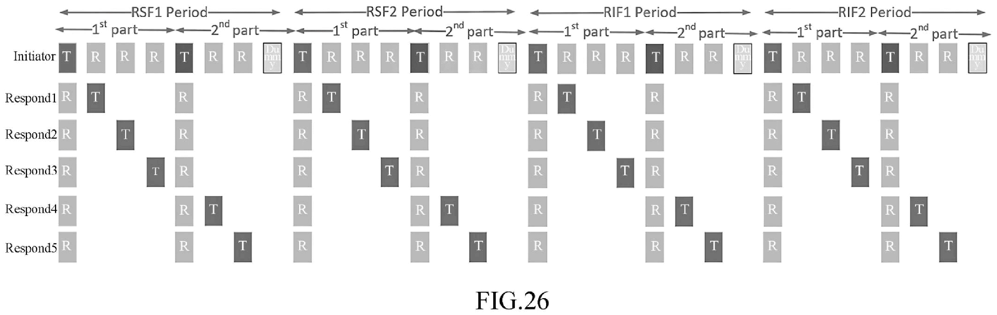

FIG. 26 is a schematic diagram showing positions of dummy fragments in DS-TWR ranging based on RSF and RIF according to an embodiment of the present application.

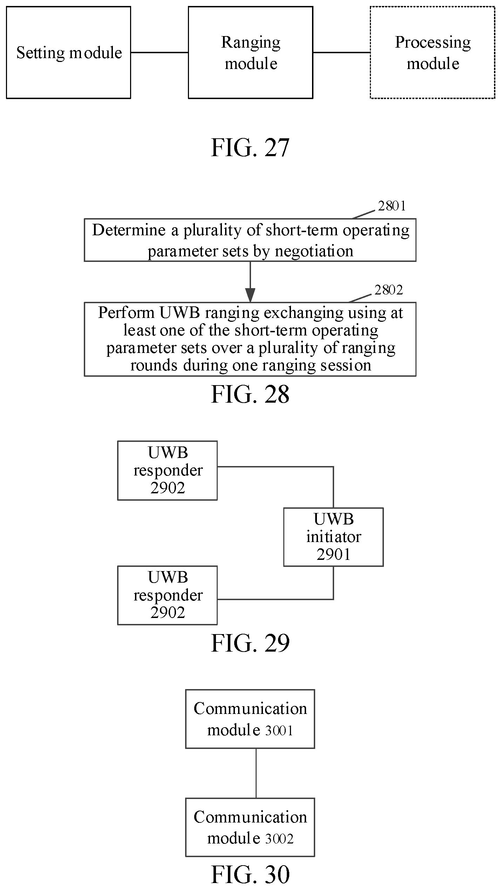

FIG. 27 is a schematic diagram of a structure of a ranging apparatus according to an embodiment of the present application.
FIG. 28 illustrates schematically a flowchart of another yet ranging method according to an embodiment of the present application.
FIG. 29 is a schematic diagram of a structure of a UWB network according to an embodiment of the present application.
FIG. 30 is a schematic diagram of a structure of an integrated circuit according to an embodiment of the present application.

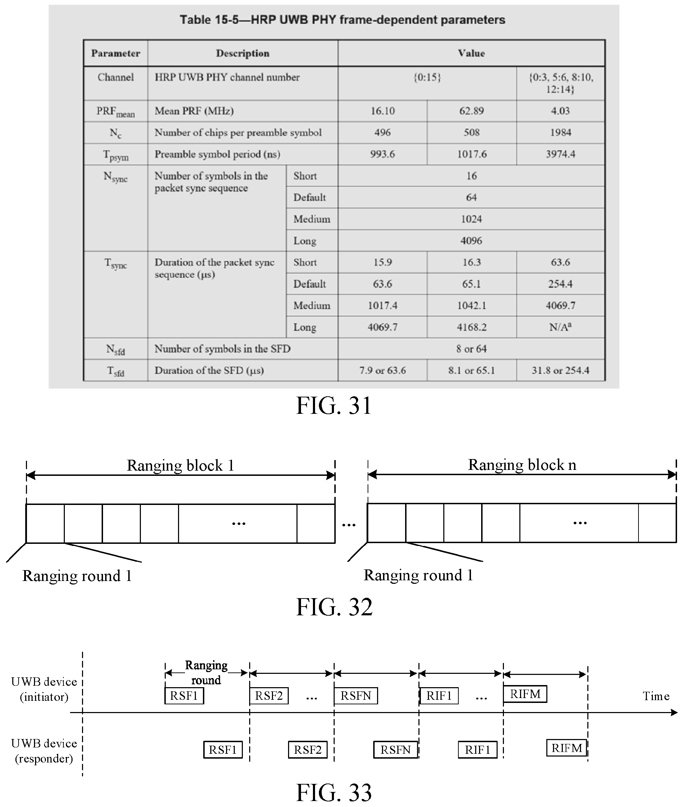

FIG. 31 is a schematic diagram of a structure of an SP3 packet used in UWB ranging exchanging according to an embodiment of the present application.
FIG. 32 is a schematic diagram of timing of UWB ranging exchanging according to an embodiment of the present application.
FIG. 33 is a schematic diagram of timing of another UWB ranging exchanging according to an embodiment of the present application.

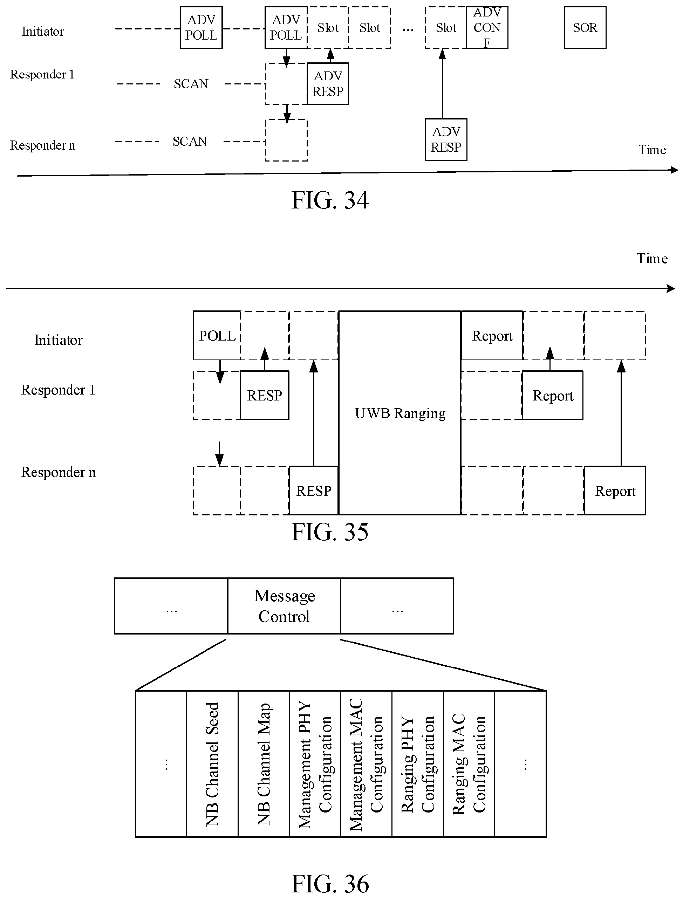

FIG. 34 is a schematic diagram of negotiation timing of a plurality of short-term operating parameter sets according to an embodiment of the present application.
FIG. 35 is a schematic diagram of timing of UWB ranging exchanging according to an embodiment of the present application.
FIG. 36 is a schematic diagram of a structure of fields of a short-term operating parameter set according to an embodiment of the present application.

### Detailed Description

In order to make purposes, technical solutions and advantages of the present application clearer, the embodiments of the present application will be described in detail below with reference to the accompanying drawings. It should be noted that the embodiments in the present application and features in the embodiments can be arbitrarily combined with each other if there is not conflict.

In order to facilitate the understanding of the present application, the present application will be described more fully below with reference to the accompanying drawings. Embodiments of the present application are shown in the accompanying drawings. However, the present application may be implemented in many different forms and is not limited to the embodiments described herein. Rather, these embodiments are provided for the purpose of making the disclosure of the present application more thorough and comprehensive.

Unless otherwise defined, all technical and scientific terms used herein have the same meaning as that commonly understood by those skilled in the art belonging to the present application. The terms used herein in the specification of the present application is for the purpose of describing specific embodiments only, and is not intended to limit the present application.

It may be understood that the terms "first" and "second" used in the present application are for descriptive purposes only and cannot be understood as indicating or implying relative importance or implicitly indicating the quantity of technical features indicated. Thus, a feature defined as "first", "second" may explicitly or implicitly includes at least one of the features. In the description of the present application, "a plurality" means at least two, for example, two, three, etc. unless otherwise explicitly and specifically defined.

It can be understood that "connection" in the following embodiments should be understood as "electrical connection", "communication connection", or the like if connected circuits, modules, units, and the like have electrical signals or data transmission to each other.

As used herein, the singular forms "a", "one", and "the/said" may also include plural forms unless the context clearly dictates otherwise. It should also be understood that the terms "including/comprising" or "having" and the like specify the presence of the stated features, integers, steps, operations, components, portions, or combinations thereof, but do not exclude the possibility of the presence or addition of one or more other features, integers, steps, operations, components, portions, or combinations thereof. Meanwhile, the term "and/or" as used in this specification includes any and all combinations of relevant listed items.

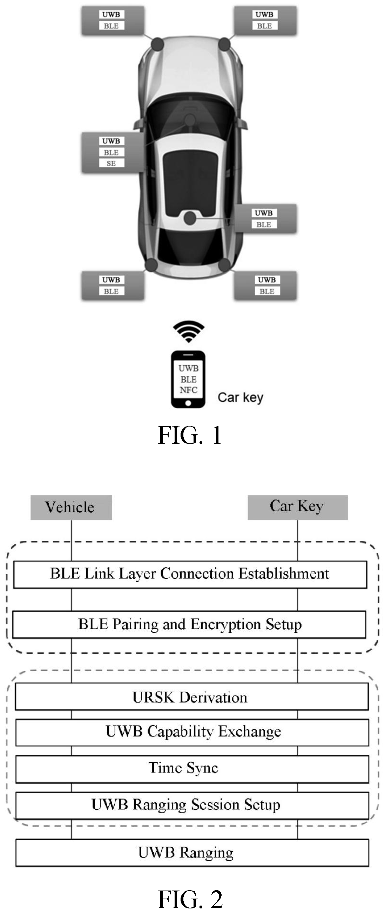

Vehicles are one of the main markets for the UWB technology. FIG. 1 is a schematic diagram of an application scenario of the UWB technology in a vehicle. A vehicle is commonly provided with 5 or 6 UWB anchors, in which 4 anchors are outside the vehicle, and 1 or 2 anchors are inside the vehicle. Typically, the UWB anchors are also equipped with Bluetooth Low Energy (BLE) functionality, that is, they are anchors supporting both UWB and BLE technologies. Clocks of UWB and BLE are independent from each other. In procedures of ranging session setup and ranging, the Car Connectivity Consortium (CCC) and Intelligent Car Connectivity Industry Ecosystem Alliance (ICCE, China) digital key standards are adopted. BLE plays a vital role in CCC/ICCE digital key (i.e., car key) application scenarios, and is applied in vehicle owner pairing, passive entry, and UWB ranging session setup.

Combined with that shown in FIG. 2, in an application scenario of a CCC digital key 3.0 supporting BLE and UWB, a BLE connection is primarily used to establish a secure channel between a vehicle and a car key, perform bi-directional authentication between them, and perform the UWB session setup. The BLE connection is used for the UWB session setup, which includes: UWB Ranging Session Key (URSK) derivation and negotiation, UWB capability exchanging, assistance in providing coarse time synchronization information to a UWB MAC time grid, assuming UWB and BLE chipsets have independent local clocks, and the UWB ranging session setup. In an embodiment, Double-Sided Two-Way Ranging (DS-TWR) is used in the CCC, with up to 10 anchors in each ranging round. Typically, there are 5 or 6 anchors in a vehicle. The UWB ranging packet exchange is implemented based on the 802.15.4z standard in the CCC, in which a SP0 (Scrambled Timestamp Sequence(STS) Packet type 0) is used for ranging control messages (pre-polling) and ranging report messages (final data), while a SP3 (STS Packet type 3) is used for RFRAMEs (poll, response, and final). The exchanging of RFRAMEs is performed three times between a pair of initiator and responder. The transmission time, communication delay and synchronization precision of the SP0 signal are all critical factors affecting the ranging precision, which makes the SP0 signal become the bottleneck of the ranging.

In current automotive UWB ranging, usually there are 5 or 6 combined UWB + BLE anchors in a vehicle, and the CCC standard is widely adopted, the Double-Sided Two-Way Ranging (DS-TWR) is applied between one initiator (i.e., car key) and a plurality of (typically 5) responders (i.e., anchors), and BLE is utilized for UWB ranging session setup and assisting in coarse time synchronization, wherein local clocks of BLE and UWB chips within an anchor typically are independents.

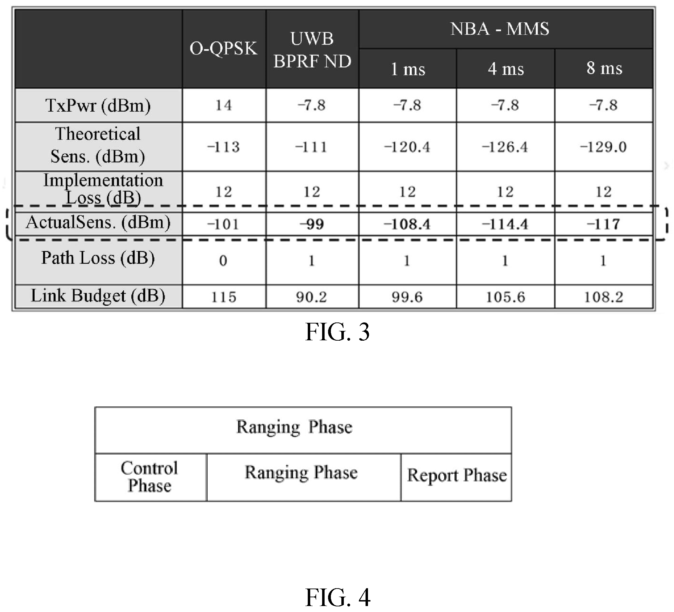

If multi-millisecond (MMS) processing is introduced into automotive application scenarios, it is expected that 18 dB improvement in link budget can be achieved via Narrowband-Assisted Millisecond Synchronization (NBA-MMS). As shown in FIG. 3, it shows budget comparisons of Quadrature Phase Shift Keying (O-QPSK), Ultra-Wideband Base Pulse Repetition Frequency No Data (UWB BPRF ND) and NBA-MMS in different conditions, especially the performance improvement when MMS is introduced. In FIG. 3, TxPwr represents transmission power in dBm, Theoretical Sens. represents theoretical sensitivity in dBm, Implementation Loss represents implementation loss in dB, Actual Sens. represents actual sensitivity in dBm, Path Loss represents path loss in dB, and Link Budget represents link budget in dB. As shown in FIG. 3, the 18 dB improvement in link budget is primarily aimed at RFRAME without data, but in a CCC scenario, the SP0 control and report messages with data must be exchanged during the ranging round. As the duration for NBA-MMS increases from 1ms to 8ms, the link budget improves significantly, from 99.6 dB to 108.2 dB. Compared with O-QPSK and UWB BPRF ND, NBA-MMS significantly improves sensitivity, and achieves a higher link budget even with its lower transmit power, which showing that the improvement is particularly outstanding with the integration of MMS.

If the SP0 signal is employed for the control message and the report message in the control phase and report phase, only a data rate of 110 kbps can achieve the 1 ms MMS gain, as determined by calculation. In other words, the link budget gain of the UWB driven MMS is limited by the control and report phases. Modes of utilizing the MMS gain include, but are not limited to: NBA-MMS and Out-of-Band (OOB)-assisted MMS. Here, OOB assisted MMS means the link overhead in the control and report phases is offloaded to an OOB channel, such as BLE. However, due to unclear spectrum policies for the Unlicensed National Information Infrastructure (UNII)-3 and UNII-5 bands (e.g., in China), NBA-MMS has not yet matured in the market. Furthermore, NBA-MMS must be supported on both the client side (e.g., car key or smartphone) and the vehicle side. It may take longer for NBA-MMS to become practice due to relatively long technology upgrade procedure for automakers, but BLE already exists. In other words, OOB assisted MMS will play a very important role in implementing MMS link budget gain in ranging.

Since UWB is a transmit power limited system that has a maximum transmit power of -41.3 dBm/Mhz. That is, within the 1MHz bandwidth, the maximum transmit power of the UWB device is -41.3 dBm, wherein dBm is a power unit denoting the decibel value relative to one milliwatt (mW). In other words, the UWB device's maximum output power is limited to -14.3 dBm over a 500 MHz bandwidth, equivalent to -14.3 dBm/500 MHz. This measurement is conducted by statistics of the received powers using a period of 1 ms. Therefore, in 1 ms, energy transmitted by the power of -14.3 dBm is 37 nanojoules (nJ), i.e., -14.3 dBm * 1 ms = 37 nJ. For the transmit power limited UWB system, the number of pulses and power of the pluses are limited.

In order to improve sensitivity, it is mentioned in the IEEE 802.15.4ab protocol that one fragment is transmitted in 1200 Ranging Slot Time Units (RSTU, equivalent to 1 millisecond) and a plurality of fragments are transmitted in a plurality of 1-milliseconds, that is, multi-millisecond (MMS) UWB technology. In a UWB system, the limited transmit power leads to limited power of each transmitted fragment. This means that a single fragment may not supply sufficient signal strength to implement high-precision ranging. Therefore, in order to improve the sensitivity of the system, the received signal energy can be increased by increasing the number of fragments or increasing the number of repetitions of fragments. For example, one fragment is transmitted in 1ms, a plurality of fragments are transmitted in a plurality of 1ms, and then the sensitivity is improved by combining Channel Impulse Responses (CIRs).

When applying the UWB MMS technology to positioning implementation defined in the CCC protocol, UWB ultra-wideband signals are distributed in a plurality of short pulses (i.e., fragments) of 1ms. In the UWB MMS technology, the UWB ranging sensitivity is improved by combining a plurality of Ranging Sequence Fragments (RSFs) and/or a plurality of Ranging Integrity Fragments (RIFs).

Precise time synchronization and correct data frame identification are ensured by the exchange of the Time Synchronization (SYNC) signal and the Start Frame Delimiter (SFD) between the first and second UWB devices for the UWB ranging. The SYNC signal is to synchronize the clocks of the first UWB device and the second UWB device before the starting of the UWB ranging, and the SFD is to enable the second UWB device to correctly identify and locate the starting of the data frame, so as to accurately decode and process its received data. An urgent technical problem to be solved is: how to performing the exchange of the SYNC signal and the SFD between the first UWB device and the second UWB device in the UWB ranging, while maintaining the UWB ranging performance.

To ensure the precision and reliability for the UWB ranging, a ranging method is provided in an embodiment of the present application. The method involves the exchange of a Time Synchronization (SYNC) signal and a Start Frame Delimiter (SFD) between a first UWB device and a second UWB device for UWB ranging, thereby achieving UWB signal synchronization and ensuring precise time alignment and correct data frame identification. The ranging method according to the embodiment of the present application may include: transmitting, by the first UWB device for UWB MMS ranging, one or more SYNC and SFD fragments to the second UWB device to achieve time synchronization between the first and second UWB devices.

According to the ranging method in the embodiment of the present application, the SYNC and SFD fragments are exchanged between the first UWB device and the second UWB device for the UWB ranging without affecting the UWB ranging performance, ensuring precise time synchronization and correct data frame identification, and thereby ensuring precision and reliability for the UWB ranging.

In an exemplary instance, during a ranging phase of the UWB MMS ranging, one or more combinations of a SYNC signal and a SFD (herein simply referred to as SYNC and SFD fragment) are exchanged between the first UWB device as an initiator and the second UWB device as a responder for UWB ranging starting from a first fragment, so as to achieve time synchronization between the initiator and the responder. In this way, the precision and reliability for the UWB ranging are ensured.

In an embodiment, in the ranging phase of the UWB MMS ranging as shown in FIG. 4, one or more SYNC and SFD fragments are continuously exchanged between the initiator and responder for the UWB ranging starting from a first fragment, wherein each fragment includes one SYNC and SFD fragment.

In an embodiment, during the ranging phase of the UWB MMS ranging, the SYNC and SFD fragment is exchanged by the initiator and responder for the UWB ranging using the first fragment. In other words, in the ranging phase of the UWB MMS ranging, a SYNC and SFD fragment, as the first fragment, is transmitted by the initiator for the UWB ranging to the responder, and a SYNC and SFD fragment, as the first fragment, is transmitted by the responder for the UWB ranging to the initiator, to implement the exchange of the SYNC signal and the Start Frame Delimiter (SFD) between the initiator and the responder. In this way, without affecting the performance of the UWB ranging, SYNC and SFD are exchanged between the initiator and the responder of UWB ranging, which ensures precise time synchronization and correct identification of data frames, and provides a guarantee for the precision and reliability for the UWB ranging.

In an exemplary instance, the UWB MMS ranging is a UWB driven MMS.

In an exemplary instance, the UWB MMS ranging is Out-Of-Band (OOB)-assisted UWB MMS ranging. The OOB assisted UWB MMS means that the control phase and report phase are implemented using the OOB mechanism. In a UWB ranging system, the OOB assisted UWB MMS ranging may communicate on a frequency band outside the UWB channel (such as Bluetooth (BLE)) to enhance ranging performance and link budget. In order to fully utilize the link budget gain of the UWB MMS, the OOB assisted UWB MMS ranging plays an important role, for example, in automotive markets with the UWB MMS.

According to the ranging method in the embodiment of the present application, in the ranging phase of the UWB MMS ranging, one or more SYNC and SFD fragments are exchanged by the initiator and the responder starting from the first fragment (e.g. exchanging the SYNC and SFD fragment in the first fragment), so that the SYNC and SFD are exchanged between the initiator and the responder for the UWB ranging without affecting the UWB ranging performance, ensuring precise time synchronization and correct identification of the data frame, and thereby ensuring the precision and reliability for the UWB ranging.

In an exemplary instance, the ranging method according to an embodiment of the present application may further include: in a control phase of the UWB MMS ranging as shown in FIG. 4, the initiator and the responder for the UWB ranging exchange, using the OOB mechanism, auxiliary information which assists the initiator and the responder in determining to receive SYNC and SFD fragments from each other in the ranging phase.

In an exemplary instance, the auxiliary information may include one or any combination of the following: time offset information, sequence configuration information, and correspondence in a time domain.

Time offset information is used to determine the time offset at which the initiator and the responder start receiving the first segment upon entering the ranging phase of the UWB MMS ranging, and

Sequence configuration information is used to determine a length of the SYNC and SFD fragment, i.e., a duration of the SYNC and SFD fragment. The sequence configuration information may also be used to determine a length of the SYNC signal or a length of SFD. It should be noted that, since the length of SFD may be calculated based on the length of the SYNC signal determined based on the configuration information, it can be considered that the length of SFD and the length of the SYNC and SFD fragment are also determined based on the configuration information.

In an embodiment, the sequence configuration information may include, but is not limited to, a sequence length that determines the duration of the SYNC and SFD fragment, and may also include a spreading factor that affects an anti-interference capability and a ranging precision of the signal. The sequence length refers to a total length of a signal sequence constituting the SYNC fragment, and is represented in the number of chips or bits. Taking the sequence length of the SYNC fragment as N chips and the sequence length of the SFD fragment as M chips as an example, then the total length of the SYNC and SFD fragment is N + M chips. How a signal spreads over the frequency domain depends on the spreading factor. By configuring the spreading factor, the system may adjust the anti-interference capability of the SYNC and SFD fragment. For example, a higher spreading factor expands the signal to a wider frequency band, thereby enhancing the anti-interference performance and enabling the system to detect and synchronize signals more reliably in an environment with larger noise or interference.

Transmission is performed using the OOB mechanism (such as a BLE signal) during the control phase of the UWB MMS ranging, and the ranging phase of the UWB MMS ranging is implemented based on the UWB signal. Therefore, the correspondence in the time domain is used to represent the time correspondence in different time domains of the control phase and the ranging phase. In an embodiment, the correspondence in the time domain is correspondence between time for the BLE signal and time for the UWB signal.

In an exemplary instance, in the ranging phase, after time synchronization is completed, the method may further include: exchanging, by the initiator and the responder, ranging fragments to implement ranging.

In an exemplary instance, in a round of ranging polling, after the completion of transmission and reception of all fragments (that is, the end of the ranging phase), if the report phase is enabled, the method may further include: the initiator and responder enter the report phase as shown in FIG. 4 to transmit/receive corresponding ranging reports.

In an embodiment, if the report phase is not enabled (such as if the ranging report is transmitted using the OOB mechanism), the round of ranging polling ends after the completion of transmission and reception of all fragments.

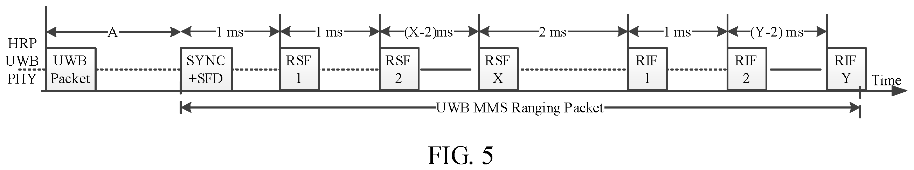

In an embodiment, as shown in FIG. 5, in the ranging method in the embodiment of the present application, Advanced Responder Device (High Rate Pulse Advanced Device (HRP-ADEV)) based on a High Rate Pulse Ultra-Wideband Physical Layer (HRP UWB PHY) supports a UWB MMS packet mode to improve the UWB ranging sensitivity. The MMS packet (UWB Packet) of the HRP UWB PHY includes a SYNC and SFD fragment located in the first fragment, wherein a time interval A is 1 ms, and the time interval A is a time interval between starting of a packet in the control phase and starting of the MMS packet in the ranging phase. If other PHYs are used for control and reporting, then the UWB MMS ranging transmission should follow the UWB driving situation shown in FIG. 4, and the HRP UWB PHY MMS packet includes the SYNC and SFD fragment located in the first fragment. In FIG. 5, X represents the number of RSF fragments, Y represents the number of RIF fragments, and the value of X and/or Y may be zero.

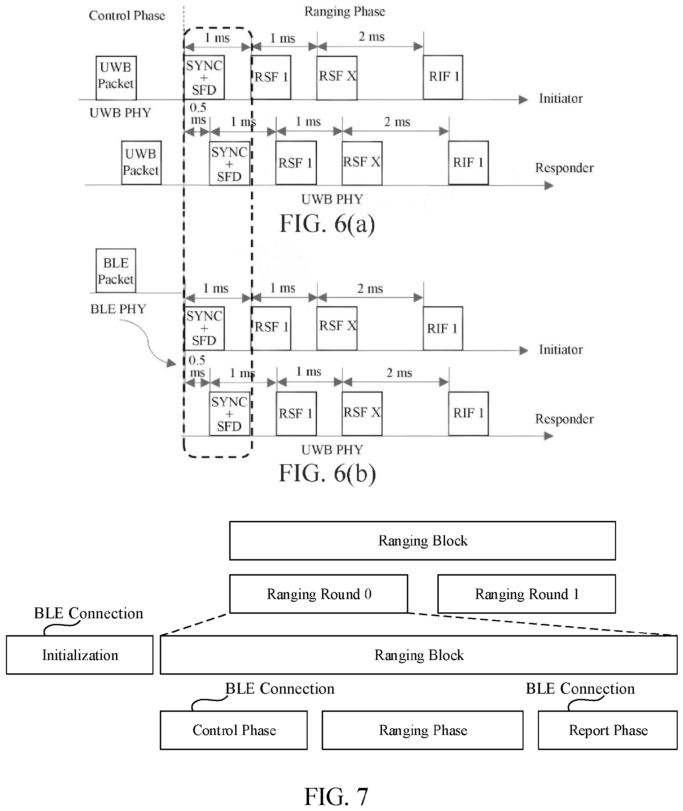

In an embodiment, FIG. 6(a) is a schematic diagram of the UWB driven MMS ranging transmission in an embodiment of the present application. For the UWB MMS ranging which is the UWB driven MMS ranging as shown in FIG. 6(a), a UWB packet using UWB PHY is used for control and ranging. In an embodiment, FIG. 6(b) is a schematic diagram of OOB assisted UWB MMS ranging transmission in the embodiment of the present application. For the UWB MMS ranging that is the OOB assisted UWB MMS ranging, as shown in FIG. 6(b), the OOB PHY (such as Bluetooth (BLE Packet) the BLE PHY) is used for control, and is switched to the UWB MMS packet mode based on the UWB PHY when ranging is required. For any one of the UWB driven MMS ranging and the OOB assisted UWB MMS ranging, as shown in the dashed box in the figure, the SYNC and SFD fragment is exchanged in the first fragment in the ranging phase according to the embodiment of the present application.

In an exemplary instance, taking the BLE assisted UWB MMS as an example, the OOB assisted UWB MMS ranging follows a schematic phase of the UWB driven MMS ranging as shown in FIG. 7, in which compact frames for the initialization phase, the control phase and the report phase of the UWB MMS are implemented using BLE connections. A ranging block may include several ranging rounds. In FIG. 7, two ranging rounds (such as a ranging round 0 and ranging round 1) are included as an example, and each ranging round includes a control phase, a ranging phase and a report phase. In an embodiment, in the initialization phase a UWB MMS ranging session is started, which includes, but is not limited to, for example, exchanging compact frames to configure the MMS ranging session, indicating an initiation offset of the control phase and the like. The compact frames involved in the initialization phase may include, for example, a set of Advertisement (ADV) compact frames for preliminary communication and discovery between devices, Start of Ranging (SOR) compact frames for indicating formal start of the ranging session, and the like. A private field may include, for example, coarse time synchronization information. In an embodiment, in the control phase the UWB MMS ranging round is renegotiated, which includes, but is not limited to, exchanging compact frames to configure short-term operating parameters (optional), exchanging compact frames to transmit private address generation parameters, and scheduling a plurality of responders in one-to-many MMS ranging, etc. The compact frames involved in the control phase may include, for example, a set of one-to-one compact frames, and a set of one-to-many compact frames. In an embodiment, in the ranging phase, the MMS fragments are exchanged in the UWB channel. In an embodiment, in the report phase, measurement reports are exchanged between the initiator and the responder, and compact frames involved in the report phase may include, but are not limited to, a set of one-to-one reporting compact frames, a set of one-to-many reporting compact frames.

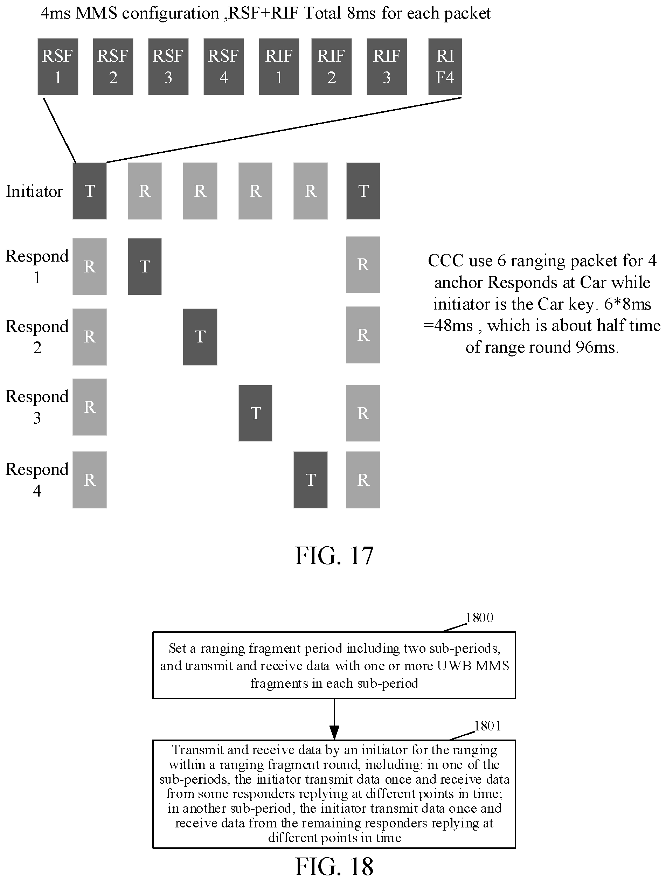

In one exemplary instance, the OOB assisted UWB MMS ranging may include, but is not limited to, OOB assisted one-to-one UWB driven UWB MMS ranging, OOB assisted one-to-many UWB driven UWB MMS ranging, and OOB assisted Time efficient one-to-many UWB driven UWB MMS ranging. An implementation of the OOB assisted Time efficient one-to-many UWB MMS ranging may be referred to FIG. 18.

Herein, in order to distinguish the OOB assisted one-to-many UWB MMS ranging and the OOB assisted Time efficient one-to-many UWB MMS ranging, the OOB assisted one-to-many UWB MMS ranging is referred to as a first OOB assisted one-to-many UWB MMS ranging, and the OOB assisted Time efficient one-to-many UWB MMS ranging is referred to as a second OOB assisted one-to-many UWB MMS ranging.

The SYNC and SFD fragment exchanged in the first fragment is taken as an example below to describe implementation of wideband signal synchronization in different OOB assisted UWB MMS ranging scenarios in detail.

In an embodiment, the OOB assisted UWB MMS ranging is an OOB assisted one-to-one UWB MMS ranging. In an OOB assisted one-to-one UWB MMS ranging process, both device sides (i.e., the initiator and the responder) usually carry the packets and signaling packets in the control phase and report phase of the UWB MMS ranging using BLE connection. In practical deployment, the timings of the BLE chips and UWB chips in both device sides are usually independent from each other, and the timing precision required for UWB MMS ranging (microsecond level) is much higher than the timing precision required for BLE connection (millisecond level). Therefore, in the OOB assisted one-to-one UWB MMS ranging process, it is required to introduce a time synchronization mechanism in the embodiment of the present application to ensure that both device sides performing the UWB MMS ranging achieve time synchronization in a UWB time domain, thus ensuring precise time synchronization and correct identification of data frames, thereby ensuring precision and reliability for the UWB ranging.

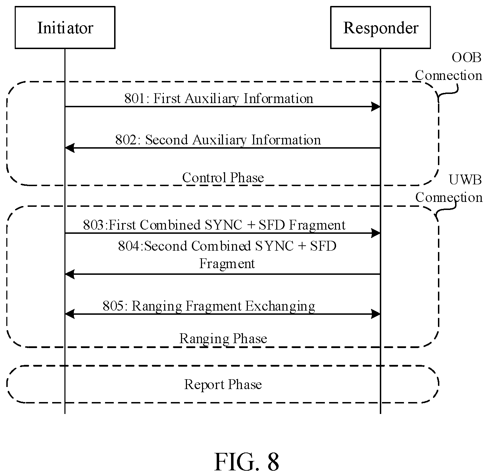

FIG. 8 illustrates schematically a flowchart of a first embodiment of a ranging method according to an embodiment of the present application. In the first embodiment, the OOB assisted UWB MMS ranging is an OOB assisted one-to-one UWB MMS ranging. As shown in FIG. 8, the processing of the initiator and/or the responder may be as follows.

In an act 803, in a ranging phase, an initiator transmits a first SYNC and SFD fragment as a first fragment, to a responder.

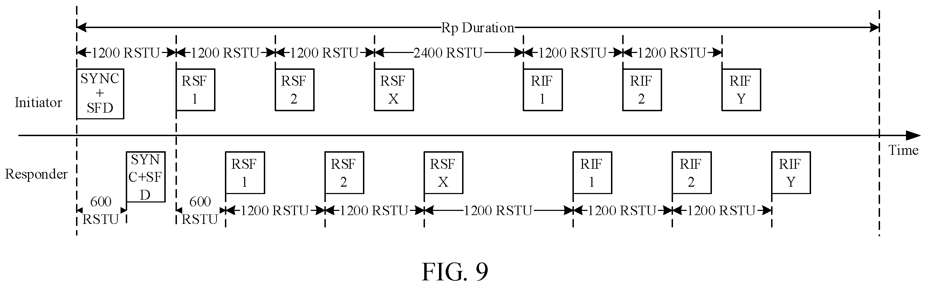

In an embodiment, as shown in FIG. 9, the first fragment is defined within a preset duration such as 1200 RSTUs (i.e., 1 ms) from starting of the ranging phase, and the first SYNC and SFD fragment is transmitted by the initiator to the responder from start of the first fragment.

In an act 804, in the ranging phase, the responder transmits a second SYNC and SFD fragment, as a first fragment, to the initiator.

In an embodiment, as shown in FIG. 9, the first fragment is defined within 1200 RSTUs (i.e., 1 ms) from the starting of the ranging phase, and the second SYNC and SFD fragment is transmitted by the responder to the initiator at 0.5 times the preset duration (such as 600 RSTUs (i.e., 0.5 ms)) after the starting of the first fragment.

In this embodiment, in the ranging phase of the UWB MMS ranging process, the two device sides respectively transmit the SYNC and SFD fragment to the peer device side using the first fragment exchanged after entering the ranging phase, thereby implementing time synchronization between the two device sides.

In an exemplary instance, in the ranging phase, after time synchronization is completed, the method further includes an act 805.

In the act 805, the initiator and the responder exchange ranging fragments to implement ranging.

In an exemplary instance, exchanging, by the initiator, the ranging fragments may include the follows.

As shown in FIG. 9, starting from a second segment of the ranging phase (i.e., starting at a preset duration of 1200 RSTUs from the starting of the ranging phase), the initiator transmits one RSF fragment every 1200 RSTUs until a first preset number (phyUwbMmsRsfNumberFrags) of RSF fragments (such as X RSF fragments in FIG. 9) are transmitted. In other words, the first RSF fragment is transmitted at 1200 RSTUs after the starting of the ranging phase, and thereafter, one RSF fragment is transmitted at an interval of 1200 RSTUs from a previous RSF fragment until the first preset number of RSF fragments are transmitted.

Starting from twice the preset duration (such as 2400 RSTUs (i.e., 2 milliseconds)) after transmission of a last RSF fragment starts, the initiator transmits one RIF fragment every 1200 RSTUs until a second preset number (phyUwbMmsRifNumberFrags) of RIF fragments are transmitted (such as Y RIF fragments in FIG. 7). In other words, a first RIF fragment is transmitted at 2400 RSTUs after the transmission of the last RSF fragment starts, and thereafter, one RIF fragment is transmitted at an interval of 1200 RSTUs from a previous RIF fragment until the second preset number of RIF fragments are transmitted.

In an embodiment, if there is no RSF fragment, the initiator may transmit one RIF fragment every 1200 RSTUs starting from the second fragment of the ranging phase (i.e., at a preset duration of 1200 RSTUs from the starting of the ranging phase), until the second preset number of RIF fragments are transmitted.

It should be noted that, a value of the first preset number and/or the second preset number may be zero.

In an exemplary instance, exchanging, by the responder, the ranging fragments may include the follows.

As shown in FIG. 9, the responder transmits an RSF fragment every 1200 RSTUs starting from the second fragment of the ranging phase (i.e., 1.5 times the preset duration of the ranging phase, such as 1200 + 600 RSTUs (1.5 milliseconds)), until the first preset number of RSF fragments (such as X RSF fragments in FIG. 9) is transmitted. In other words, the first RSF fragment is transmitted at 1200 + 600 RSTUs after the starting of the ranging phase, and thereafter, each one RSF fragment is transmitted at an interval of 1200 RSTUs from a previous RSF fragment until the first preset number of RSF fragments are transmitted.

Starting from 2400 RSTUs after transmission of a last RSF fragment starts, the responder transmits one RIF fragment every 1200 RSTUs, until the second preset number of RIF fragments (such as Y RIF fragments in FIG. 7) are transmitted. In other words, the first RIF fragment is transmitted at 2400 RSTUss after the transmission of the last RSF fragment starts, and thereafter, each one RIF fragment is transmitted at an interval of 1200 RSTUs from a previous RIF fragment until the second preset number of RIF fragments are transmitted.

In an embodiment, if there is no RSF fragment, the responder may transmit one RIF fragment every 1200 RSTUs starting from the second fragment of the ranging phase (i.e., at 1200 RSTUs from the starting of the ranging phase), until the second preset number of RIF fragments are transmitted.

In FIG. 9, a total duration (RpDuration) of the UWB MMS ranging phase is macMmsRpDuration slots. In an embodiment, the macMmsRpDuration may be set as at least a duration required to transmit and receive all RSF fragments and RIF fragments, but may also be larger to allow flexibility in scheduling the report phase and/or to allow additional time after the last fragment.

For the UWB driven MMS ranging or the OOB assisted UWB MMS ranging, if there are only RSF fragments in the ranging phase, the initiator may transmit the SYNC and SFD fragment at the first fragment from the starting of the ranging phase, and continue to transmit subsequent RSF fragments at a fixed interval of 1200 RSTUs. If only RIF fragments are used, the initiator may transmit the SYNC and SFD fragment at the first fragment from the starting of the ranging phase and continue to transmit subsequent RIF fragments at a fixed interval of 1200 RSTUs.

In an example in which two responders are included, for a responder of which time offset indication field is set as 0, a SYNC and SFD fragment may be transmitted in a first fragment at 400 RSTU after entering the ranging phase, and if there are only RSF fragments, subsequent RSF fragments may be continuously transmitted at a fixed interval of 1200 RSTUs. If only RIF fragments are used, the responder may transmit the SYNC and SFD fragment in the first fragment at 400 RSTU after entering the ranging phase, and continue to transmit subsequent RIF fragments at a fixed interval of 1200 RSTUs. For the responder of which time offset indication field is set as 1, the SYNC and SFD fragment may be transmitted in the first fragment at 800 RSTU after entering the ranging phase, and if there are only RSF fragments, subsequent RSF fragments may be continuously transmitted at a fixed interval of 1200 RSTUs. If only RIF fragments are used, the responder may transmit the SYNC and SFD fragment in the first fragment at 800 RSTU after entering the ranging phase and continue to transmit subsequent RIF fragments at a fixed interval of 1200 RSTUs.

In an embodiment, the OOB mechanism should immediately follow the UWB driven MMS measuring range phase when time synchronization is required between the initiator and the responder.

In an exemplary instance, after the transmission and reception of macMmsRpDuration and all fragments, if the report phase is enabled, the initiator and responder enter the report phase to transmit/receive corresponding ranging reports, and if the report phase is not enabled, for example, when the ranging report is transmitted using the OOB mechanism, the ranging polling is achieved after the transmission and reception of macMmsRpDuration and all fragments.

In an exemplary instance, before the initiator transmits the SYNC and SFD fragment to the responder using the first fragment transmitted from the starting of the ranging phase, processing of the initiator and/or the responder may be further included as follows.

In an act 801, in a control phase, the initiator transmits first auxiliary information to the responder.

In an exemplary instance, the initiator transmits to the responder first auxiliary information (also referred to as UWB time synchronization auxiliary information) for assisting the responder in determining that the SYNC and SFD fragment from the initiator is received in the ranging phase using the OOB mechanism, such as a BLE connection.

In an act 802, in the control phase, the responder transmits second auxiliary information to the initiator.

In an exemplary instance, the responder transmits to the initiator the second auxiliary information (also referred to as UWB time synchronization auxiliary information) for assisting the initiator in determining that the second SYNC and SFD fragment from the responder is received in the ranging phase using the OOB mechanism, such as a BLE connection.

In the embodiment of the present application, both device sides exchange the UWB time synchronization auxiliary information using the BLE connection in the control phase of the UWB MMS ranging, therefore, in the ranging phase of the UWB MMS ranging, both device sides exchange the SYNC and SFD fragments based on the obtained UWB time synchronization auxiliary information to establish time synchronization between the two device sides in the UWB time domain.

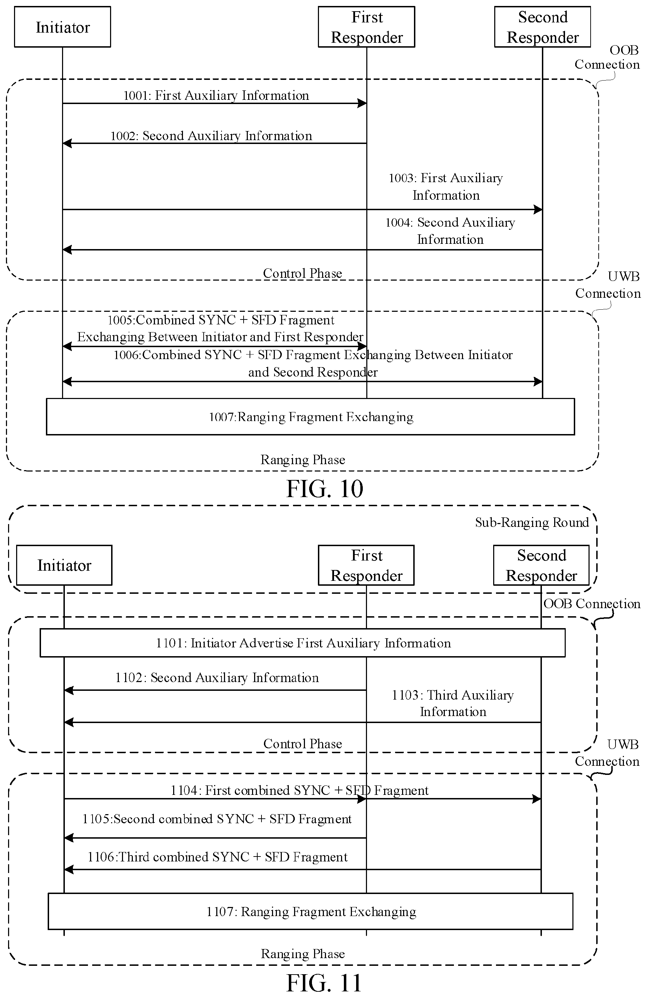

FIG. 10 illustrates schematically a flowchart of a second embodiment of a ranging method according to an embodiment of the present application, in which the OOB assisted UWB MMS ranging is an OOB assisted one-to-many UWB MMS ranging. In the second embodiment, the OOB assisted basic one-to-many UWB MMS ranging process may be decomposed into a plurality of OOB assisted one-to-one UWB MMS ranging processes described in the first embodiment. For each one-to-one UWB MMS ranging process, as described in the first embodiment, in the ranging phase of the UWB MMS ranging process, the SYNC and SFD fragments are transmitted to the peer device side using the first fragments exchanged after entering the ranging phase, respectively, so as to establish time synchronization between the two device sides. As shown in FIG. 10, the processing of an initiator and/or a responder may be as follows.

In acts 1001 to 1002, in a control phase, an initiator transmits first auxiliary information to a first responder, and the first responder transmits second auxiliary information to the initiator.

In acts 1003 to 1004, in the control phase, the initiator transmits the first auxiliary information to a second responder, and the second responder transmits third auxiliary information to the initiator.

In other words, in the control phase of the UWB MMS ranging, the initiator sequentially exchanges auxiliary information with a plurality of responders using Bluetooth connections.

Through the acts 1001 to 1004, the initiator exchanges the auxiliary information for UWB time synchronization with the first responder and the second responder, respectively, using an OOB mechanism such as a BLE connection. In this embodiment, in the control phase of the UWB MMS ranging, the initiator exchanges UWB time synchronization auxiliary information with the responders, respectively, using the BLE connection, so that in the ranging phase of UWB MMS ranging, the initiator and the responders may exchange SYNC and SFD fragments respectively based on the obtained UWB time synchronization auxiliary information to establish time synchronization between the initiator and the responders in the UWB time domain.

In an act 1005, the initiator exchanges a SYNC and SFD fragment with the first responder using a first fragment immediately upon entering the ranging phase.

In an act 1006, the initiator exchanges a SYNC and SFD fragment with the second responder using a first fragment immediately upon entering the ranging phase.

That is, in the ranging phase of the UWB MMS ranging, the initiator sequentially exchanges the SYNC and SFD fragments with the plurality of responders using the first fragment after entering the ranging phase.

In this embodiment, in the ranging phase of the UWB MMS ranging process, the initiator and the responders may transmit the SYNC and SFD fragments to the peer side respectively based on the obtained UWB time synchronization auxiliary information using the exchanged first fragment immediately upon entering the ranging phase, thereby establishing the time synchronization between the initiator and each responder.

In an exemplary instance, in the OOB assisted basic one-to-many UWB MMS ranging scenario in the second embodiment, two or more responders may be included. The first responder and the second responder shown in FIG. 8 are responders which are assumed to be selected from a plurality of responders for the current UWB ranging.

In an act 1007, the initiator exchanges ranging fragments with the first responder and the second responder, respectively, to implement ranging.

After the time synchronization is completed, the initiator exchanges ranging fragments with the first responder and the second responder, respectively, and an exchanging process of ranging fragments between the initiator and each responder is consistent with the exchanging process of the ranging fragments between the initiator and the responder in the one-to-one UWB MMS ranging process in the first embodiment, which is not repeated here.

FIG. 11 illustrates schematically a flowchart of a third embodiment of a ranging method according to an embodiment of the present application, in which the OOB assisted UWB MMS ranging is an OOB assisted Time efficient one-to-many UWB MMS ranging. In the third embodiment, in the OOB assisted time efficient one-to-many UWB MMS ranging process, the initiator groups a plurality of responders into one or more sub-ranging rounds (Sub-Range Group). For each sub-ranging round, one initiator and one or more responders (e.g., one, two or more responders) are included. For each sub-ranging round, in the ranging phase of the UWB MMS ranging process, one initiator exchange SYNC and SFD fragments with one or more responders using the first fragment exchanged immediately upon entering the ranging phase to establish time synchronization between the initiator and the responders in the sub-ranging round. As shown in FIG. 11, taking a case in which for a sub-ranging round, a first responder and a second responder are included as an example, acts that the processing of the initiator and/or the responders may include are as follows.

In an act 1101, in a control phase of a current sub-ranging round, an initiator advertises its own first auxiliary information using the OOB mechanism, such as a BLE connection.

In an act 1102, a first responder transmits second auxiliary information to the initiator.

In an act 1103, a second responder transmits third auxiliary information to the initiator.

In the acts 1102 to 1103, the initiator advertises auxiliary information for UWB time synchronization to the first responder and the second responder in the same sub-ranging round using the OOB mechanism (such as a BLE connection), and the first responder and the second responder in the sub-ranging round transmit their own auxiliary information to the initiator, respectively.

In this way, in the control phase of the current sub-ranging round of the UWB MMS ranging, the initiator exchanges UWB time synchronization auxiliary information with the responders, respectively, using the BLE connection, so that in the ranging phase of the current sub-ranging round of the UWB MMS ranging, the initiator and the responders may exchange SYNC and SFD fragments respectively based on the obtained UWB time synchronization auxiliary information to establish time synchronization between the initiator and each responder in the UWB time domain.

In an act 1104, the initiator transmits a SYNC and SFD fragment to all responders in the current sub-ranging round, including the first responder and the second responder in this embodiment, using the first fragment immediately upon entering the ranging phase of the current sub-ranging round.

In acts 1105 to 1106, the first responder transmits a second SYNC and SFD fragment to the initiator as a first fragment immediately upon entering the ranging phase of the current sub-ranging round, and the second responder transmits a third SYNC and SFD fragment to the initiator as a first fragment immediately upon entering the ranging phase of the current sub-ranging round.

In this embodiment, in the ranging phase of the current sub-ranging round of the UWB MMS process, the initiator, the first responder and the second responder in the current sub-ranging round transmit a SYNC and SFD fragment to a peer side respectively based on the UWB time synchronization auxiliary information obtained in the control phase of the current sub-ranging round, and using the first fragments exchanged between the initiator, the first responder and the second responder immediately upon entering the ranging phase, thereby establishing the time synchronization between the initiator and each of the first responder and the second responder.

In an act 1107, the initiator exchanges ranging fragments with the first responder and the second responder in the current sub-ranging round, respectively, to implement ranging.

After the time synchronization is completed, the initiator exchanges ranging fragments with the first responder and the second responder in the current sub-ranging round, respectively, and an exchanging process of ranging fragments between the initiator and each responder in the current sub-ranging round is consistent with the exchanging process of the ranging fragments between the initiator and the responder in the one-to-one UWB MMS ranging process in the first embodiment, which is not repeated here.

In an exemplary instance, in the ranging phase of UWB MMS process of a ranging group, the initiator exchanges one or two ranging fragments with each responder in the sub-ranging round, respectively, wherein the one or two ranging fragments may be one or two RSF fragments and/or one or two RIF fragments.

In an exemplary instance, one or more sub-ranging rounds may be included.

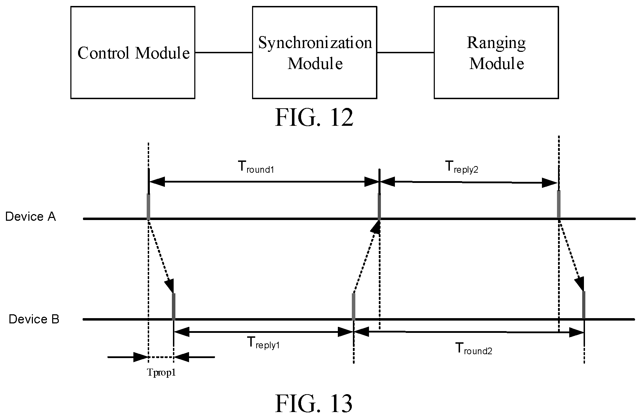

A ranging apparatus is provided in an embodiment of the present application. As shown in FIG. 12, the ranging apparatus includes a synchronization module.

The synchronization module is configured to exchange one or more SYNC and SFD fragments between an initiator and a responder for UWB MMS ranging to achieve time synchronization.

In an exemplary instance, the ranging apparatus according to the embodiment of the present application further includes a control module configured to transmit, using the OOB mechanism, auxiliary information for assisting both device sides for the UWB MMS ranging to determine to receive a SYNC and SFD fragment from the peer device in the ranging phase, in the control phase of the UWB MMS ranging.

In an exemplary instance, the ranging apparatus according to the embodiment of the present application further includes a ranging module configured to exchange ranging fragments to implement ranging.

In an embodiment, the synchronization module may be configured to, starting from a first fragment immediately upon the ranging phase of the UWB MMS ranging, continuously transmit one or more SYNC and SFD fragments, wherein each fragment includes one SYNC and SFD fragment.

In an embodiment, the synchronization module may be configured to transmit the SYNC and SFD fragment using the first fragment in the ranging phase of the UWB MMS ranging.

In an exemplary instance, the UWB MMS ranging is UWB driven MMS ranging, or out-of-band OOB assisted UWB MMS ranging.

In an embodiment, when the UWB MMS ranging is the OOB assisted UWB MMS ranging, an OOB frequency band is a frequency band for Bluetooth.

In an exemplary instance, the UWB driven MMS ranging includes: UWB driven one-to-one UWB MMS ranging, UWB driven one-to-many UWB MMS ranging, or UWB driven time efficient one-to-many UWB MMS ranging.

In an exemplary instance, the OOB assisted UWB MMS ranging includes: OOB assisted one-to-one UWB MMS ranging, OOB assisted one-to-many UWB MMS ranging, or OOB assisted time efficient one-to-many UWB MMS ranging.

In an embodiment, the OOB assisted UWB MMS ranging is OOB assisted one-to-one UWB MMS ranging, wherein the ranging apparatus is an initiator/responder for the UWB MMS ranging, and the synchronization module may be configured to, in the ranging phase of the UWB MMS ranging, transmit a first SYNC and SFD fragment to the responder/initiator as the first fragment.

Accordingly, the control module may be configured to transmit first auxiliary information from the initiator to the responder, and transmit second auxiliary information from the responder to the initiator using the Bluetooth connection in the control phase of the UWB MMS ranging.

In an embodiment, the OOB assisted UWB MMS ranging is OOB assisted one-to-many UWB MMS ranging, an OOB assisted basic one-to-many UWB MMS ranging process includes a plurality of OOB assisted one-to-one UWB MMS ranging processes, the ranging apparatus serves as an initiator/responder for the UWB MMS ranging, and the synchronization module may be configured to transmit a first SYNC and SFD fragment as the first fragment to the responder/initiator for each one-to-one UWB MMS ranging process.

Accordingly, the control module may be configured to transmit the first auxiliary information from the initiator to the responder, and transmit the second auxiliary information from the responder to the initiator using the Bluetooth connection in the control phase of the UWB MMS ranging.

In an embodiment, the OOB assisted UWB MMS ranging is OOB assisted time efficient one-to-many UWB MMS ranging, the ranging apparatus is an initiator/responder for the UWB MMS ranging, and the synchronization module may be configured to, for each sub-ranging round, transmit a SYNC and SFD fragment from the initiator to all responders in the current sub-ranging round in the ranging phase of the current sub-ranging round in the UWB MMS ranging using the first fragment, and from the responders in the current sub-ranging round transmit their own SYNC and SFD fragments to the initiator as the first fragments, respectively; wherein for each sub-ranging round, one initiator and one or more responders are included.

Accordingly, the control module may be configured to, for each sub-ranging round, advertise from the initiator its own first auxiliary information using a Bluetooth connection in the control phase of UWB MMS ranging; wherein each responder in the current sub-ranging round individually transmits its own auxiliary information to the initiator.

In an exemplary instance, the ranging apparatus serves as the initiator, and the ranging module may be configured to transmit one RSF fragment every 1 millisecond starting at 1 millisecond from the starting of the ranging phase until a first preset number of RSF fragments are transmitted, and transmit one RIF fragment every 1 millisecond starting from 2 milliseconds after the transmission of a last RSF fragment starts until a second preset number of RIF fragments are transmitted; or transmit one RIF fragment every 1 millisecond starting at 1 millisecond from the starting of the ranging phase until the second preset number of RIF fragments are transmitted.

In an exemplary instance, the ranging apparatus serves as the responder, and the ranging module may be configured to transmit one RSF fragment every 1 millisecond starting at 1.5 millisecond from the starting of the ranging phase, respectively, until a first preset number of RSF fragments are transmitted, and transmit one RIF fragment every 1 millisecond starting at 2 milliseconds after the transmission of the last RSF fragment starts, respectively, until a second preset number of RIF fragments are transmitted; or
transmit one RIF fragment every 1 millisecond starting at 1.5 milliseconds after the starting of the ranging phase, respectively, until a second preset number of RIF fragments are transmitted.

A UWB device is also provided in an embodiment of the present application, including any one of the ranging apparatus according to the embodiments of the present application.

A UWB system is also provided in an embodiment of the present application. The UWB system includes at least one first UWB device and one or more second UWB devices.

The first UWB device is configured to transmit one or more SYNC and SFD fragments from a first fragment immediately upon the ranging phase of the UWB MMS ranging to achieve time synchronization with the second UWB device.

The second UWB device is configured to transmit one or more SYNC and SFD fragments from a first fragment immediately upon the ranging phase of the UWB MMS ranging to achieve time synchronization with the first UWB device.

FIG. 13 is a schematic diagram of a Double-Sided Two-Way Ranging (DS-TWR) process. As shown in FIG. 13, a ranging frame is transmitted by a device A (such as a UWB tag) to a device B (such as a UWB anchor). Upon receiving the ranging frame from the device A, the device B replies with a ranging frame after a time delay of Treply1. Upon receiving the ranging frame replied from the device B, the device A replies with a last ranging frame after a time delay of Treply2, to complete the ranging process.

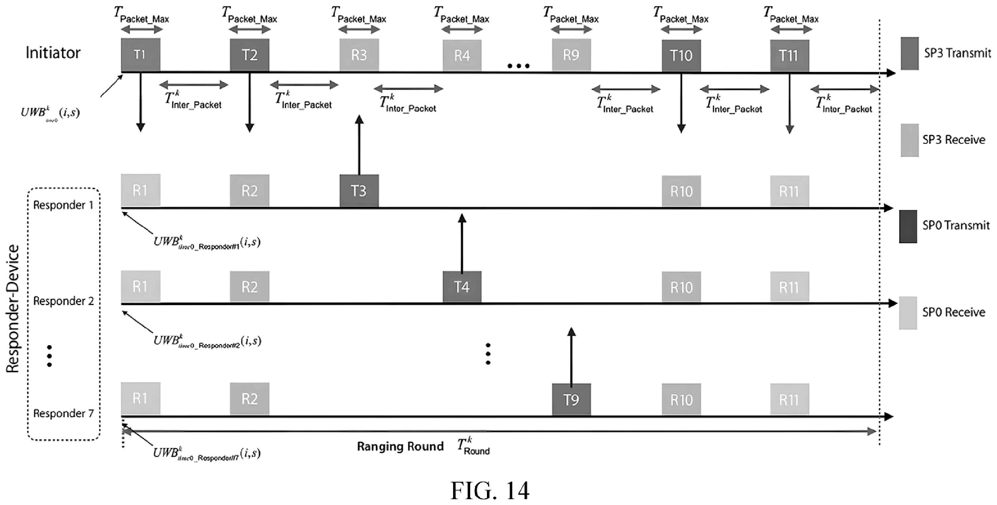

FIG. 14 is a schematic diagram of an Enhanced Symmetrical Two-Way Ranging (ess-TWR) process that is a ranging process defined in the FiRa protocol. As shown in FIG. 14, a device C transmits a ranging frame to a device D. Upon receiving the ranging frame transmitted by the device C, the device D replies with a first ranging frame to the device A after a time delay of Treply1, and replies with a second ranging frame to the device C after a time delay of Treply2. Upon the device C receives the two ranging frames replied by the device D, the ranging process is completed.

In either DS-TWR or ess-TWR, the ranging process is completed with three ranging frames, and the error ranges of the two ranging processes are substantially the same. Furthermore, the responder in DS-TWR and the responder in ess-TWR may complete the ranging procedure by each transmitting a ranging frame to the other. This ranging mode of completing the process using two ranging frames is also referred to as single-sided ranging. The errors of DS-TWR and ess-TWR are less than an error of the single-sided ranging.

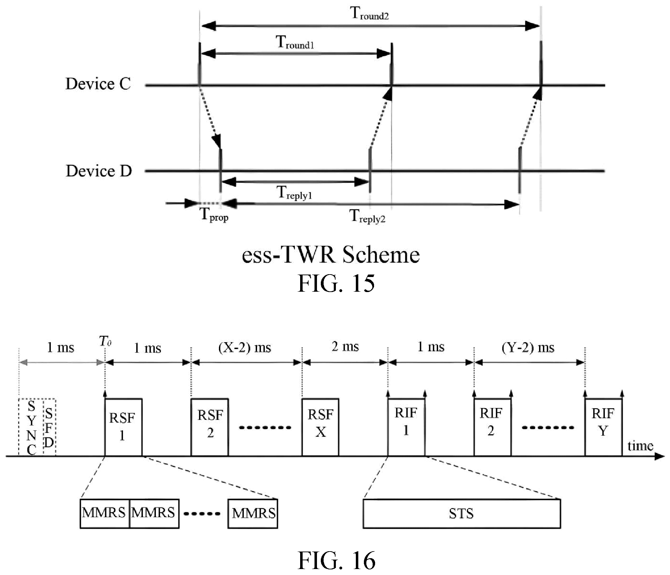

FIG. 15 is a schematic diagram of a UWB ranging process. In an example, FIG. 15 illustrates a Double-Sided Two-Way Ranging (DS-TWR) based UWB ranging process defined in a Car Connectivity Consortium (CCC) protocol. In FIG. 15, an initiator for ranging corresponds to a UWB tag (e.g. a car key) in the DS-TWR ranging, and a responder x corresponds to a UWB anchor in the DS-TWR ranging, for example, an x-th anchor disposed in the vehicle, x = 1, 2, ..., N.

Taking N = 7 as an example in FIG. 15, a packet T1 is a control packet that carries parameters for subsequent ranging, packets T2-T10 are ranging packets, and a packet T11 is a ranging time result packet. In a ranging round t, the car key, serving as the initiator, transmits two packets T2 and T10, and receives a total of 7 packets R3-R9. An on-board anchor, serving as the responder x, receives two packets R2 and R10. Each on-board anchor which serves as a responder, transmits a packet, that is, the on-board anchors transmit packets T3-T9. In this way, for each one-to-one combination of the car key and a car anchor, there are three packets for location, so at to complete DS-TWR.

For the UWB ranging in the CCC protocol, greater than or equal to 4 on-board anchors as the responders, may be provided, and the car key serves as the initiator, to implement DS-TWR ranging in a one-to-many mode. In this way, a distance between the car key and each anchor may be obtained, and relative three-dimensional spatial position parameters may be calculated based on these distances. In the DS-TWR, a device A transmits a ranging frame to a device B, then the device B replies to device A with a ranging frame after a time delay of Treply1. Finally, the device A transmits a last ranging frame to the device B after a time delay of Treply2 from receiving the ranging frame replied by the device B, and finally the round-trip transmission time is used to calculate a distance from the device A to the device B to complete the ranging process. That is, in the DS-TWR-based UWB ranging in CCC, for any one of the responders, the packet transmission and reception process of the initiator includes TxRxTx, and the packet transmission and reception procedure of the responder includes RxTxRx, thus the data transmission and reception mode in the DS-TWR may be represented as TxRxTx - RxTxRx, wherein Tx represents transmitting data, and Rx represents receiving data. In another example, Enhanced Symmetrical Two-Way Ranging (ess-TWR) is another ranging mode that uses the round-trip transmission time to calculate the distance. ess-TWR is also implemented with three packets for location. In ess-TWR based UWB ranging, the packet transmission and reception process of the initiator includes TxRxRx for any responder, the packet transmission and reception process of the responder includes RxTxTx, thus the data transmission and reception mode in the DS-TWR may be represented as TxRxTx - RxTxRx. The errors of Ess-TWR and DS-TWR location modes are substantially the same.

Since UWB is a transmit power limited system that has a maximum transmit power of -41.3 dBm/Mhz. That is, within the 1MHz bandwidth, the maximum transmit power of UWB device is -41.3 dBm, wherein dBm is a power unit denoting the decibel value relative to one milliwatt (mW). In other words, the UWB device's maximum output power is limited to -14.3 dBm over a 500 MHz bandwidth, equivalent to -14.3 dBm/500 MHz. This measurement is conducted by statistics of the received power using a period of 1 ms. Therefore, in 1 ms, the energy transmitted by a power of -14.3 dBm is 37 nanojoules (nJ), i.e., -14.3 dBm * 1 ms = 37 nJ. For the transmit power limited UWB system, the number of pulses and power of the pluses are limited.

In order to improve sensitivity, it is mentioned in the IEEE 802.15.4ab protocol that one fragment is transmitted in 1 millisecond and a plurality of fragments are transmitted in a plurality of 1-milliseconds, that is, multi-millisecond (MMS) UWB technology. In a UWB system, the limited transmit power leads to limited power of each transmitted fragment. This means that a single fragment may not supply sufficient signal strength to implement high-precision ranging. Therefore, in order to improve the sensitivity of the system, the received signal energy can be increased by increasing the number of fragments or increasing the number of repetitions of fragments. For example, one fragment is transmitted in 1ms, a plurality of fragments are transmitted in a plurality of 1ms, and then the sensitivity is improved by combining Channel Impulse Responses (CIRs).

In the positioning implementation of multi-millisecond (MMS) UWB technology defined in the CCC protocol, UWB ultra-wideband signals are distributed in a plurality of short pulses (i.e., fragments) of 1 millisecond. The UWB ranging sensitivity is improved by the UWB MMS technology by combining a plurality of Ranging Sequence Fragments (RSFs) and/or a plurality of Ranging Integrity Fragments (RIFs). As shown in FIG. 16, the format of MMS first includes, synchronization (SYNC) to achieve synchronization and obtain a frequency offset, followed by RSFs and RIFs, such as RSF1, RSF2, ..., RSFx, RIF1, RIF2, ..., RSFy in FIG. 16, wherein each RSF is within 1ms, and each RIF is within 1ms.

Combined with a schematic diagram of transmitting and receiving packets in the DS-TWR-based UWB ranging process shown in FIG. 17, if the UWB MMS technology is simply applied to the CCC protocol, as shown in FIG. 17, in an example 4 responders are disposed on the vehicle, there are a total of 6 packets, and each packet is configured with x = 4 RSFs and y = 4 RIFs, then the total time required to complete the ranging is 6 × 8 ms = 48 ms. Generally, a ranging round is set as 96 ms in the ranging phase in the related art, which may lead to one or more of the following problems in the ranging process. In an aspect, excessively long total ranging time results in prohibitively high power consumption of the UWB device (e.g., the car key in this embodiment). In another aspect, during dummy time between Tx (that is, transmitting data) and Rx (that is, receiving data), the CPU cannot enter a sleep state, and the high-precision Phase-Locked Loop (PLL) for timing cannot be powered down, resulting in high power consumption of the UWB device. In yet another aspect, changes in body angle over a long time may cause signal variations, thereby resulting in inaccurate ranging, and decreased ranging accuracy.

For some applications that are sensitive to power consumption (such as ranging between a car key and a vehicle), the car key requires more sleep time and less ranging time,, so that its battery consumption is reduced. In order to shorten the ranging time and reduce the power consumption of the UWB device, a method for implementing ranging processing in UWB ranging is provided in an embodiment of the present application, which is time efficient one-to-many UWB MMS ranging, including: setting a ranging fragment period, wherein each ranging fragment period includes two or more sub-periods, and transmitting and receiving data with one or more UWB MMS fragments in each sub-period.

The data transmission and reception by an initiator for the ranging within a ranging fragment period includes the following acts: in each sub-period, the initiator transmits data once and receives data replied from some of all the responders at different time points.

The sub-period herein is equivalent to the Sub-Ranging Round mentioned above.

In an exemplary instance, prior to the time efficient one-to-many UWB MMS ranging, any method for exchanging one or more SYNC and SFD fragments between an initiator and responders for the UWB MMS ranging according to the embodiments of the present application is executed to achieve time synchronization between the initiator and the responders.

In an embodiment, all responders refer to two or more responders.

FIG. 18 illustrates schematically a flowchart of a ranging method according to an embodiment of the present application. As shown in FIG. 18, in this embodiment, taking each ranging fragment period including two sub-periods as an example, the method may include the following acts 1800 and 1801.

In the act 1800, a ranging fragment period including two sub-periods is set, and data are transmitted and received with one or more UWB MMS fragments in each sub-period.

In the act 1801, the data are transmitted and received by an initiator for the ranging within a ranging fragment period, including:
in one of the sub-periods, the initiator transmits data once and receives data replied from some responders at different time points; and in the other sub-period, the initiator transmits data once and receives data replied from the remaining responders at different time points.

In an embodiment, in one of the sub-periods, the initiator transmits data once and receives data replied from m responders at different time points; in the other sub-period, the initiator transmits data once and receives data replied from the remaining (n - m) responders at different time points.

In an embodiment, n is the number of responders, and n is an integer greater than or equal to 2; m = n and n = 2, or $m = \frac{n}{2}$ and n is an even number greater than 2, or $m = \frac{n + 1}{2}$ or $m = \frac{n - 1}{2}$ and n is an odd number greater than or equal to 3.

According to the ranging method in the embodiment of the present application, the UWB MMS technology is well applied to the ranging process including a plurality of responder devices, which reduces the ranging time required for the ranging phase, thereby reducing power consumption of the UWB device.

In an exemplary instance, the ranging method according to an embodiment of the present application may further include: in a ranging initialization phase, a ranging initialization message transmitted by the initiator carries one or more pieces of the following information:
the number of the responders, which is set as n;
a start slot index, which is set as a start slot index for the ranging phase; and
a list of the responders, including respective addresses of the responders, and sequence numbers indicating orders in which the responders transmit packets.

A method for implementing ranging processing in UWB is also provided in an embodiment of the present application, including: setting a ranging fragment period, each ranging fragment period includes two or more sub-periods, and transmitting and receiving data with one or more UWB MMS fragments in each sub-period;
the data transmission and reception by a responder for the ranging within a ranging fragment period includes: in each sub-period, all responders receive data from the initiator once, and some of the responders transmit data to the initiator once at different time points; wherein there are two or more responders.

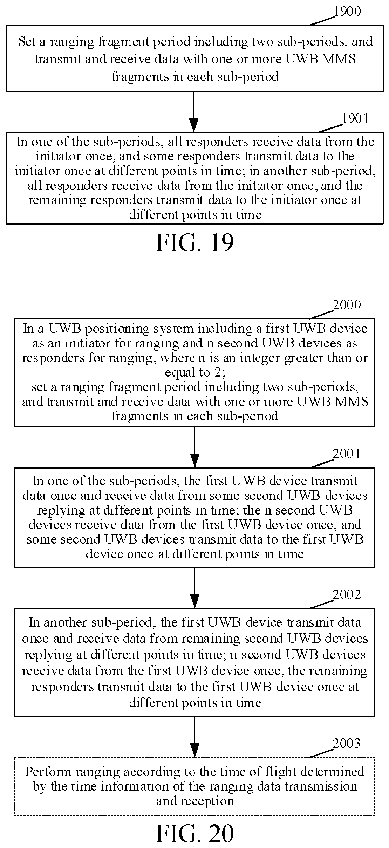

FIG. 19 illustrates schematically a flowchart of another ranging method according to an embodiment of the present application. As shown in FIG. 19, in this embodiment, taking each ranging fragment period including two sub-periods as an example, the method may include the following acts 1900 and 1901.

In the act 1900, a ranging fragment period including two sub-periods is set, and data are transmitted and received with one or more UWB MMS fragments in each sub-period.

In the act 1901, the data are transmitted and received by a responder for the ranging within a ranging fragment period, including: in one of the sub-periods, all responders receive data from the initiator once, and some responders transmit data to the initiator once at different time points; and in the other sub-period, all responders receive data from the initiator once, and the remaining responders transmit data to the initiator once at different time points.

In an exemplary instance, in one of the sub-periods, n responders receive data from the initiator once, and m responders transmit data to the initiator once at different time points; in the other sub-period, n responders receive data from the initiator once, and (n - m) responders transmit data to the initiator once at different time points.

In an embodiment, n is the number of responders, and n is an integer greater than or equal to 2; m = n and n = 2, or $m = \frac{n}{2}$ and n is an even number greater than 2, or $m = \frac{n + 1}{2}$ or $m = \frac{n - 1}{2}$ and n is an odd number greater than or equal to 3.

According to the ranging method in the embodiment of the present application, the UWB MMS technology is well applied to the ranging process including a plurality of responder devices, which reduces the ranging time required for the ranging phase, thereby reducing power consumption of the UWB device.

In an exemplary instance, the ranging method according to an embodiment of the present application may further include: in the ranging initialization phase, the responders receive a ranging initialization message from the initiator, and transmit data to the initiator at corresponding time points e according to the start slot index and the sequence number carried in the ranging initialization message.

In an exemplary instance, there may be one or more ranging fragment periods, and one or more ranging fragment periods constitute a ranging phase.

In an exemplary instance, a ranging fragment period may be defined as a ranging slot, or a sub-period may be defined as one ranging slot.

In an embodiment, the ranging fragment period may include one or more ranging slots.

In an embodiment, one sub-period may include one ranging slot, and the ranging slot is configurable.

In an exemplary instance, the ranging fragment period may include a ranging sequence fragment period and/or a ranging integrity fragment period.

In an embodiment, the ranging method according to the embodiment of the present application further includes:
for the ranging fragment period including a plurality of fragments, the initiator performs channel impulse response combination according to the ranging sequence fragments transmitted by a same responder and received by the initiator during the plurality of ranging sequence fragment periods; and/or,
for the ranging integrity fragment period including a plurality of fragments, the initiator performs channel impulse response combination according to the ranging integrity fragments transmitted by a same responder and received by the initiator during the plurality of ranging integrity fragment periods.

In an embodiment, the ranging method according to the embodiment of the present application further includes:
for the ranging fragment period including a plurality of fragments, the responder performs channel impulse response combination according to the ranging sequence fragments transmitted by a same initiator and received by the responder during the plurality of ranging sequence fragment periods (RSFs); and/or,
for the ranging integrity fragment period including a plurality of fragments, the responder performs channel impulse response combination according to the ranging integrity fragments transmitted by a same initiator and received by the responder during the plurality of ranging integrity fragment periods.

In an exemplary instance, the UWB MMS fragment is RSF and/or RIF in one sub-period. In an embodiment, as shown in FIG. 21(a), there are three RSFs and/or RIFs in each sub-period, respectively. In an embodiment, as shown in FIG. 21(b), there are three RSFs and/or RIFs in one sub-period, and there is one RSF and/or RIF in another sub-period.

In the embodiments of the present application, the ranging fragment period may also be referred to as an RSF/RIF period. The RSF/RIF period includes a first part (1^{st} part, i.e., one of the sub-periods) and the second part (2^{nd} part, i.e., the other sub-period). In an embodiment, a duration of the first part is the same as a duration of the second part.

In an exemplary instance, the duration of one sub-period is greater than or equal to 1 millisecond (ms). In an embodiment, the duration of the first part or the second part may be set as 1200 RSTUs (i.e., 1 ms). In an embodiment, the duration of the first part or the second part may be set as an integral multiple of 1200 RSTUs (i.e., 1 ms) if there are extremely large number of responses (i.e., the number of responders is too large to be inserted into a 2 ms RSF/RIF period).

In an embodiment, the ranging fragment period is 2 ms and the sub-period is 1 ms. In an embodiment, as shown in FIG. 21(a), 1 ms is occupied by three RSFs and/or RIFs. In an embodiment, as shown in FIG. 21(b), 1 ms is occupied by 3 RSFs and/or RIFs in one sub-period, and 1 ms is occupied by 1 RSF and/or RIF in another sub-period.

In an exemplary instance, the initiator transmits data once at the starting of indicated 1 ms within a sub-period.

According to the ranging method in the embodiment of the present application, the UWB MMS technology is well applied to the ranging process including a plurality of responder devices, which reduces the ranging time required for the ranging phase, thereby reducing power consumption of the UWB device.

A method for implementing ranging processing in UWB positioning is also provided in an embodiment of the present application, wherein a UWB location system includes one first UWB device as an initiator for ranging and n second UWB devices as responders for ranging, n is an integer greater than or equal to 2. A ranging fragment period including two sub-periods is set, and one or more UWB MMS fragments are used to transmit and receive data in each sub-period.

The data transmission and reception within a ranging fragment period includes:
in one of the sub-periods, the first UWB device transmits data once and receives data from some of the second UWB devices replying at different time points, the n second UWB devices receive data from the first UWB device once, and the some of the second UWB devices transmit data to the first UWB device once at different time points, and
in the other sub-period, the first UWB device transmits data once and receives data from the remaining second UWB devices replying at different time points, the n second UWB devices receive data from the first UWB device once, and the remaining responders transmit data to the first UWB device once at different time points.

FIG. 20 illustrates schematically a flowchart of another ranging method according to an embodiment of the present application. In this embodiment, each ranging fragment period including two sub-periods is taken as an example. As shown in FIG. 20, in a UWB location system including a first UWB device as an initiator for ranging and n second UWB devices as responders for ranging, where n is an integer greater than or equal to 2; data transmission and reception during a ranging fragment period t may include the following acts.

In an act 2000, a ranging fragment period including two sub-periods is set, and data are transmitted and received with one or more UWB MMS fragments in each sub-period.

In an act 2001, one of the sub-periods, the first UWB device transmits data once and receives data from m second UWB devices replying at different time points, the n second UWB devices receive data from the first UWB device once, and the m second UWB devices transmit data to the first UWB device once at different time points.

In an exemplary instance, in one of the sub-periods, ranging data are transmitted and received between the first UWB device and the m second UWB devices in a DS-TWR data transmission and reception mode, where m = n and n = 2, or $m = \frac{n}{2}$ and n is an even number greater than 2, or $m = \frac{n + 1}{2}$ or $m = \frac{n - 1}{2}$ and n is an odd number greater than or equal to 3.

In an exemplary instance, for any second UWB device among the m second UWB devices, transmitting and receiving the ranging data in the data transmission and reception mode of the DS-TWR in the embodiment of the present application may include: in a ranging fragment period t, when the first UWB device transmits first ranging data, the second UWB device (i.e., any second UWB device among the m second UWB devices) receives the first ranging data and replies to the first UWB device with ranging data, and the first UWB device receives the replied ranging data; when the first UWB device transmits second ranging data, the second UWB device receives the second ranging data. This is a standard DS-TWR of TxRxTx-RxTxRx, where Tx represents transmitting data, Rx represents receiving data, and a schematic diagram of ranging data transmission and reception may be referred to FIG. 13.

In an embodiment, as shown in FIG. 21(a), in this embodiment, the first UWB device is the car key (as Initiator in FIG. 21(a)), and the second UWB devices include four responders (i.e., Responder1, Responder2, Responder3, and Responder4 in FIG. 21(a)) disposed on the vehicle, that is, n = 4 in this embodiment, and n is an even number greater than 2. Therefore, $m = \frac{n}{2} = 2$. First m second UWB devices are the responder1 and the responder2, and as shown in FIG. 21(a). the initiator and the Responder1/Responder2 use the DS-TWR data transmission and reception mode to transmit and receive the ranging data.

In an act 2002, in the other sub-period, the first UWB device transmits data once and receives data from (n - m) remaining second UWB devices replied at different time points; n second UWB devices receive data from the first UWB device once, (n - m) responders transmit data to the first UWB device once at different time points; wherein m = n and n = 2, or $m = \frac{n}{2}$ and n is an even number greater than 2, or $m = \frac{n + 1}{2}$ or $m = \frac{n - 1}{2}$ and n is an odd number greater than or equal to 3.

In an exemplary instance, in the other sub-period, the first UWB device and the (n - m) remaining second UWB devices transmit and receive ranging data in a data transmission and reception mode of TxTxRx-RxRxTx, wherein m = n and n = 2, or $m = \frac{n}{2}$ and n is an even number greater than 2, or $m = \frac{n + 1}{2}$ or $m = \frac{n - 1}{2}$ and n is an odd number greater than or equal to 3, Tx represents transmitting data, and Rx represents receiving data.

In an exemplary instance, for any second UWB device among the (n - m) remaining second UWB devices, transmitting and receiving the ranging data in the data transmission and reception mode of TxTxRx-RxRxTx in the embodiment of the present application may include: in a ranging fragment period t, when the first UWB device transmits first ranging data, a second UWB device (i.e., any of the (n - m) remaining second UWB devices) receives the first ranging data; when the first UWB device transmits second ranging data, the second UWB device receives the second ranging data and responds to the first UWB device with ranging data, and the first UWB device receives the responded ranging data. A schematic diagram of transmitting and receiving ranging data using the data transmitting and receiving mode of TxTxRx-RxRxTx may be referred to FIG. 11.

Generally, in the ranging between the car key and the vehicle, the car key serves as the initiator, and there are 4 to 7 UWB anchors provided on the vehicle side as the responders. In an embodiment, the embodiment shown in FIG. 21(a) is still taken as an example. In this embodiment, n = 4, n is an even number greater than 2. Therefore, $m = \frac{n}{2} = 2$, (n - m) remaining second UWB devices are responder3 and responder4, which are two remaining devices among the four second UWB devices except for the first two second UWB devices. As shown in FIG. 21(a), the initiator and the responder2/responder3 transmit and receive ranging data in a data transmission and reception mode of TxTxRx - RxRxTx.

In an exemplary instance, the ranging fragment period t is 2 milliseconds and one sub-period is 1 ms. Since the first UWB device (such as the car key initiator), which mainly serves as the initiator for ranging, transmits more packets, it is required to ensure that two packets transmitted by the first UWB device in one ranging fragment period do not exist in a same sub-period (i.e., within 1 ms). In this way, the ranging method according to the embodiment of the present application can be consistent with the principle of MMS. In other words, it is ensured that only one packet is transmitted per 1 ms. In an embodiment, as shown in FIG. 21(a), the two data transmitted by the initiator in the ranging fragment period t are respectively within two sub-periods (1 ms) of the ranging fragment period t.

In an exemplary instance, the data transmission and reception within a ranging fragment period t in the embodiment of the present application may include:
in a sub-period of the ranging fragment period t, the first UWB device transmits first ranging data and receives ranging data responded from m second UWB devices, respectively; the n second UWB devices each receive the first ranging data transmitted from the first UWB device, and the m second UWB devices respectively respond to the first UWB device with ranging data; and
in the other sub-period of the ranging fragment period t, the first UWB device transmits second ranging data and receives ranging data responded from (n - m) remaining second UWB devices, respectively; the n second UWB devices each receive the second ranging data transmitted from the first UWB device, and the (n - m) remaining second UWB devices respond to the first UWB device with ranging data, respectively.

In an embodiment, the embodiment shown in FIG. 21(a) is still taken as an example. In this embodiment, the first UWB device is the car key (as the initiator in FIG. 21(a)), and the second UWB devices include four responders (as Responder1, Responder2, Responder3, and Responder4 in FIG. 21(a)) disposed on the vehicle (i.e., n = 4 in this embodiment, and n is an even number greater than 2). Therefore, $m = \frac{n}{2} = 2$, m second UWB devices refer to Responder1 and Responder2, and (n - m) remaining second UWB devices refer to Responder3 and Responder4, which are two remaining devices other than the two second UWB devices among the four second UWB devices. In a sub-period of the ranging fragment period t, the initiator transmits the first ranging data and receives the ranging data responded from Responder1 and Responder2, respectively. All of Responder1, Responder2, Responder3 and Responder4 receive first ranging data transmitted by the initiator, and both Responder1 and Responder2 respond to the initiator with ranging data, respectively. In the other sub-period of the ranging fragment period t, the initiator transmits second ranging data and receives ranging data responded from Responder3 and Responder4, respectively. All of Responder1, Responder2, Responder3 and Responder4 receive the second ranging data transmitted by the initiator, and both Responder3 and Responder4 respond to the first UWB device with ranging data, respectively. In this embodiment, in one ranging fragment period t including two sub-periods, the initiator completes the transmitting and receiving mode of TxRxRx per sub-period using two sub-periods. In order to be consistent with the principle of MMS (that is, to ensure that only one packet is transmitted per 1ms), the ranging fragment period t in this embodiment may be set as 2ms, and one sub-period is 1ms, so that 3 UWB MMS fragments (i.e., RSF and/or RIF) are included within 1ms, during which the initiator transmits data once, and two responders transmit data once. Taking 4 RSFs and 4 RIFs provided for each packet as an example, in this embodiment, 1 ms is occupied by 3 RSFs, so that a total of 2 * 8 ms = 16 ms is required to complete ranging, which greatly shortens the ranging time.

According to the ranging method in the embodiment of the present application, the UWB MMS technology is well applied to the ranging process including a plurality of responder devices, which reduces the ranging time period required for the ranging phase, thereby reducing power consumption of the UWB device.

In an exemplary instance, when there are 2 responders, one sub-period of the ranging fragment period of the initiator incudes RSF/RIF, and the other sub-period is a dummy fragment. In an embodiment, as shown in FIG. 21(b), in this embodiment, the first UWB device is the car key (as the initiator in FIG. 21(b)), and the second UWB devices include two responders (as Responder1 and Responder2 in FIG. 21(b)) provided on the vehicle, that is, n = 2. In this embodiment, m = n = 2, wherein m second UWB devices are Responder1 and Responder2, and there are no remaining second UWB devices. In this embodiment, the initiator operates in the transmission and reception modes of TxRxRx and TxDD in the two sub-periods, respectively. In a case where the ranging fragment period t is 2 ms and one sub-period is 1 ms, 1 ms is occupied by three RSFs, and D represents dummy, as small blank boxes shown in FIG. 21(b). Taking 4 RSFs and 4 RIFs provided for each packet as an example, a total of 2 * 8 ms = 16 ms is required to complete ranging, which greatly shortens the ranging time.

In an exemplary instance, if there are odd number of responders, for the ranging fragment period of the initiator, there is one more RSF/RIF included in one sub-period of the ranging fragment period than those included in the other sub-period, and the other sub-period includes a dummy fragment, for example, a last fragment is the dummy fragment. In an embodiment, as shown in FIG. 21(c1), the first UWB device in this embodiment is the car key (the initiator in FIG. 21(c1)), and the second UWB devices include three responders (Responder1, Responder2 and Responder3 in FIG. 21(c1)) disposed on the vehicle (i.e., n = 3 in this embodiment, and n is an odd number). Therefore, in this embodiment, $m = \frac{n + 1}{2} = 2$ is taken as an example, m second UWB devices are Responder1 and Responder2, and (n - m) remaining second UWB devices are one remaining device (i.e., Responder3) other than the two second UWB devices among the three second UWB devices. In this embodiment, the initiator operates in the transmission and reception modes of TxRxRx and TxRxD in the two sub-periods, respectively. In a case where a ranging fragment period t is 2 ms and one sub-period is 1 ms, 1 ms is occupied by three RSFs. Taking 4 RSFs and 4 RIFs provided for each packet as an example, a total of 2 * 8 ms = 16 ms is required to complete ranging, which greatly shortens the ranging time. According to the example shown in FIG. 21(c1), when there are an odd number of responders, the response cannot be equally divided into two parts. In an embodiment, for the ranging fragment period of the initiator, there is one more response fragment in a first half of the ranging fragment period (i.e., the former sub-period) than those in the second half (i.e., the later sub-period), and a dummy is added to the second half at the last fragment.

In an embodiment, as shown in FIG. 21(c2), in this embodiment the first UWB device is the car key (as the initiator in FIG. 21(c2)), and the second UWB devices include three responders (Responder1, Responder2 and Responder3 in FIG. 21(c2)) disposed on the vehicle (i.e., n = 3, and n is an odd number). Therefore, in this embodiment, $m = \frac{n - 1}{2} = 1$ is taken as an example, m second UWB devices are Responder1, and (n - m) remaining second UWB devices are two remaining devices (i.e., Responder2 and Responder3) other than the one second UWB device among the three second UWB devices. In this embodiment, the initiator operates in the transmission and reception modes of TxRxD and TxRxRx in the two sub-periods, respectively. In a case where the ranging fragment period t is 2 ms and one sub-period is 1 ms, 1 ms is occupied by three RSFs. Taking 4 RSFs and 4 RIFs provided for each packet as an example, a total of 2 * 8 ms = 16 ms is required to complete ranging, which greatly shortens the ranging time period. According to the example shown in FIG. 21(c1), when there are an odd number of responders, the response cannot be equally divided into two parts. In an embodiment, for the ranging fragment period of the initiator there is one less response fragment in a first half of the ranging fragment period (i.e., a former sub-period) than those in the second half (i.e., a later sub-period), and a dummy is added to the first half at the last fragment.

In an embodiment, as shown in FIG. 21(d), in this embodiment the first UWB device is the car key (as the initiator in FIG. 21(d)), and the second UWB devices include five responders (Responder1, Responder2, Responder3, Responder4 and Responder 5 in FIG. 21(d)) disposed on the vehicle (i.e., in this embodiment n is an odd number greater than 3, and n = 5). Therefore, in this embodiment, $m = \frac{n + 1}{2} = 3$ is taken as an example, m second UWB devices are Responder1, Responder2 and Responder3, and (n - m) remaining second UWB devices are two remaining device (i.e., Responder4 and Responder5) other than the three second UWB devices among the five second UWB devices. In this embodiment, the initiator operates in the transmission and reception modes of TxRxRxRx and TxRxRxD in the two sub-periods, respectively. In a case where the ranging fragment period t is 2 ms and one sub-period is 1 ms, 1 ms is occupied by three RSFs. Taking 4 RSFs and 4 RIFs provided for each packet as an example, a total of 2 * 8 ms = 16 ms is required to complete ranging, which greatly shortens the ranging time period.

In an embodiment, as shown in FIG. 21(e), in this embodiment the first UWB device is the car key (as the initiator in FIG. 21(e)), and the second UWB devices include six responders (Responder1, Responder2, Responder3, Responder4, Responder5 and Responder 6 in FIG. 21(e)) disposed on the vehicle (i.e., in this embodiment, n is an even number greater than 2 and n = 6). Therefore, $m = \frac{n}{2} = 3$, m second UWB devices are Responder1, Responder2 and Responder3, and (n - m) remaining second UWB devices are three remaining devices (i.e., Responder4, Responder5 and Responder6) other than the three second UWB devices among the six second UWB devices. In this embodiment, the initiator operates in the transmission and reception modes of TxRxRxRx and TxRxRxRx in the two sub-periods, respectively. In a case where the ranging fragment period t is 2 ms and one sub-period is 1 ms, 1 ms is occupied by three RSFs. Taking 4 RSFs and 4 RIFs provided for each packet as an example, a total of 2 * 8 ms = 16 ms is required to complete ranging, which greatly shortens the ranging time period.

In an exemplary instance, data transmission and reception during one ranging fragment period t in the embodiment of the present application employs UWB MMS fragment transmission, and the transmission period thereof is a ranging fragment period. In an embodiment, there are one or more repetitions of the fragment transmission. As shown in FIG. 22, an example including four repetitions of transmission and reception is illustrated, in which four ranging fragment periods form a ranging phase. In this way, by repeatedly transmitting a plurality of fragments and combining their channel impulse responses at the receiving end, the sensitivity of the UWB system is increased, thus improving the precision and reliability for the ranging.

As shown in FIG. 22, taking a process of one initiator device and four responder devices during four ranging fragment periods as an example, a process of RSF data transmission and reception between the initiator and responder1 is as follows: each ranging fragment period t is set as 2 milliseconds, and in each ranging fragment period t 6 fragments are included, wherein each fragment lasts for 1/3 ranging slot, and each ranging slot is set as 1 millisecond.

The initiator transmits an RSF fragment in each of first and fourth fragments in both the first ranging fragment period (RSF ranging fragment period) and the second ranging fragment period (RSF ranging fragment period), respectively. Responder1 transmits an RSF fragment to the initiator in each of second fragments of both the first ranging fragment period (RSF ranging fragment period) and the second ranging fragment period, respectively. The initiator and Responder1 perform DS-TWR twice in the first ranging fragment period (RSF ranging fragment period) and the second raging fragment period (RSF ranging fragment period).

The initiator performs channel impulse response combination according to the RSF fragments received and transmitted by Responder1 in the second fragments of the first ranging fragment period and the second ranging fragment period. If there are more than 2 ranging fragment periods (RSF ranging fragment periods), similarly the initiator performs the channel impulse response combination.

Responder1 performs channel impulse response combination according to the RSF fragments transmitted by the initiator and received by the Responder1 in the first fragments of the first ranging fragment period and the second ranging fragment period. Furthermore, Responder1 performs channel impulse response combination according to the RSF fragments transmitted by the initiator and received by the Responder1 in the fourth fragments in the first ranging fragment period and the second ranging fragment period. If there are more than 2 ranging fragment periods (RSF ranging fragment periods), similarly, the Responder1 performs the channel impulse response combination.

Furthermore, channel impulse response combination processes of the initiator and Responder2 are similar to those of the initiator and the Responder1, which are not repeated here.

As shown in FIG. 22, taking a process of one initiator device and four responder devices in four ranging fragment periods as an example, an RSF data transmission and reception process between the initiator and responder3 is as follows: each ranging fragment period t is set as 2 milliseconds, and 6 fragments are included in each ranging fragment period t, wherein each fragment lasts for 1/3 ranging slot, and each ranging slot is set as 1 millisecond.

The initiator transmits an RSF fragment in each of first and fourth fragments in both the first ranging fragment period (RSF ranging fragment period) and the second ranging fragment period (RSF ranging fragment period), respectively. Responder3 transmits an RSF fragment to the initiator in each of fifth fragments of both the first ranging fragment period (RSF ranging fragment period) and the second ranging fragment period, respectively. The initiator and Responder3 perform ess-TWR twice in the first ranging fragment period (RSF ranging fragment period) and the second raging fragment period (RSF ranging fragment period). During each ranging fragment period, the initiator transmits two RSF fragments.

The initiator performs channel impulse response combination according to the RSF fragments received by the initiator and transmitted by Responder3in the fifth fragments of the first ranging fragment period and the second ranging fragment period. If there are more than 2 ranging fragment periods (RSF ranging fragment periods), similarly the initiator performs the channel impulse response combination.

Responder3 performs channel impulse response combination according to the RSF fragments transmitted by the initiator and received by the Responder3 in the first fragments of the first ranging fragment period and the second ranging fragment period. Furthermore, Responder3 performs channel impulse response combination according to the RSF fragments transmitted by the initiator and received by the Responder3 in the fourth fragments in the first ranging fragment period and the second ranging fragment period. If there are more than 2 ranging fragment periods (RSF ranging fragment periods), similarly the Responder3 performs the channel impulse response combination.

Furthermore, the channel impulse response combination process of the initiator and Responder4 is similar to that of the initiator and Responder3, which is not repeated here.

According to the ranging method in the embodiment of the present application, the UWB MMS technology is well applied to the ranging process involving a plurality of responder devices, and the channel impulse response combination is performed by the UWB MMS technology, which improves ranging accuracy and reduces the ranging time required in the ranging phase, thereby reducing power consumption of the UWB device.

In some embodiments, all of the ranging phase, the ranging fragment period, the ranging sequence fragment period, the ranging integrity fragment period, the sub-period, the ranging slot, and the length of the fragment may be configured. For example, the length of each fragment (i.e., the length of each RSF/RIF) may be set in a range of 64 microseconds to 512 microseconds. For example, if the length of each fragment is set as 250 microseconds and each ranging slot is set as 1 millisecond, a ranging slot may include a maximum of 4 fragments. If a ranging fragment period is set to include 2 ranging slots, the ranging fragment period may include a maximum of 8 fragments. That is, in a case of one initiator, a maximum of 5 responders for ranging can be supported.

In the ranging method according to the embodiment of the present application, all of the ranging phase, the ranging fragment period, the ranging sequence fragment period, the ranging integrity fragment period, the sub-period, the ranging slot, and the length of the fragment may be flexibly set, which reduces the power consumption of the UWB device, and is applicable for the requirements of different number of responder devices in different scenarios.

In an exemplary instance, as shown in FIG. 20, an embodiment of the present application further includes an act 2003.

In the act 2003, ranging is performed according to time of flight determined by time information of ranging data transmission and reception.

In an exemplary instance, as shown in FIG. 13, for a part of ranging data transmitted and received in a data transmission and reception mode of DS-TWR, a first time of flight Tₚᵣₒₚ₁ may be calculated according to equation (1): ${T}_{prop 1} = \frac{\left({T}_{round 1}\times {T}_{round 2}-{T}_{reply 1}\times {T}_{reply 2}\right)}{\left({T}_{round 1}+{T}_{round 2}+{T}_{reply 1}+{T}_{reply 2}\right)}$ (1)

In equation (1), a first time difference T_{reply1} represents a time length from receiving a first ranging data by Device B to responding to Device A with the ranging data, a second time difference T_{reply2} represents a time length from receiving, by Device A, ranging data responded by Device B to transmitting, by Device A, second ranging data to Device B, a third time difference T_{round1} represents a time length from transmitting, by Device A, the first ranging data to receiving, by Device A, ranging data responded from Device B, and a fourth time difference T_{round2} represents a time length from responding, by Device B, to Device A with ranging data to receiving, by Device B, the second ranging data transmitted from Device A.

Referring to FIG. 13, in Equation (1), the first UWB device (such as Device A in FIG. 13) transmits the first ranging data to the second UWB device (such as Device B in FIG. 1), then Device B responds to Device A with ranging data after the first time difference Treply1. Finally, Device A transmits the second ranging data to Device B after the second time difference Treply2 upon receiving the responded ranging data, thereby completing the process of one ranging round.

In an exemplary instance, as shown in FIG. 23, for the improved ess-TWR in the embodiment of the present invention, that is, the part of which involves transmitting and receiving ranging data with the data transmission and reception mode of TxTxRx-RxRxTx, a second time of flight Tₚᵣₒₚ₂ may be calculated according to Equation (2): ${T}_{prop 2} = \frac{{T}_{round 1} - {T}_{reply 1} \times \left(1+δ\right)}{2}$ (2)

Referring to FIG. 23, in Equation (2), $\left(1+δ\right) = \frac{{T}_{round 1} - {T}_{round 2}}{{T}_{reply 1} - {T}_{reply 2}}$. As shown in FIG. 23, a fifth time difference T_{reply3} represents a time length from receiving, by Device B, the first ranging data to responding, by Device B, to Device A with ranging data, a sixth time difference T_{reply4} represents a time length from receiving, by Device B, second ranging data to responding, by Device B, to Device A with ranging data, a seventh time difference T_{round3} represents a time length from transmitting, by Device A, the first ranging data to receiving, Device A, ranging data responded from Device B, and an eighth time difference T_{round4} represents a time length from transmitting, by Device B, the second ranging data to receiving, by Device B, the ranging data responded from Device B.

According to the ranging method in the embodiment of the present application, the UWB MMS technology is well applied to the ranging process including a plurality of responder devices, which reduces the ranging time required for the ranging phase, thereby reducing power consumption of the UWB device.

A computer-readable storage medium is also provided in the present application, which stores computer-executable instructions, and the computer-executable instructions are used to execute any UWB ranging method described above.

A computer device is also provided in the present application. The computer device includes a memory and a processor, wherein the memory stores instructions executable by the processor to cause the processor to perform acts of any UWB ranging method described above.

In an exemplary instance, for some time-sensitive application scenarios (such as ranging between a car key and a vehicle), the car key requires more sleep time and less ranging time, so that its battery consumption is reduced. In normal circumstances, the car key serves as the initiator, and there are 4-7 UWB anchors serving as the responders on the vehicle side, and the DS-TWR ranging is performed. The control phase and the report phase of the DS-TWR are similar to those of SS-TWR, but there are two or more responders applied in the DS-TWR. In an embodiment, the auxiliary information is transmitted via the OOB mechanism (such as a BLE connection) in the control phase.

The ranging phase of the DS-TWR is different from the ranging phase of the SS-TWR. If MMS is applied to DS-TWR, the initiator transmits twice and receives from each responder once within 2ms, as shown in FIG. 24, wherein one RSF period is 2ms. The RSF period is composed of a first part (1^{st} part) and a second part (2^{nd} part), wherein the first part lasts for 1 ms, the second part lasts for 1 ms, and the initiator transmits at the starting of each of the first part and the second part, respectively. FIG. 24 shows a scenario involving four responders and four RSF periods. In a first part, some responders (the first two responders in FIG. 24) and the initiator perform standard DS-TWR. In a second part, the remaining responders (the last two responders in FIG. 24) and the initiator perform improved eSS-TWR in the embodiment of the present application, which is similar to the eSS-TWR defined in the FiRa protocol. As shown in FIG. 24, the initiator and respond1 perform TxRxTx ranging (i.e., standard DS-TWR), and the initiator and respond2 perform standard DS-TWR ranging, as well. However, in terms of respond3 or respond4, as shown in FIG. 23, the initiator and respond3 or respond4 perform eSS-TWR ranging (i.e., TxTxRx defined in the FiRa protocol).

It should be noted that when RIFs are applied to the DS-TWR ranging, its Tx and Rx ranging are similar to those of RSFs. FIG. 25 shows an example in which there are four responders, and a packet includes two RSFs and two RIFs.

In an exemplary instance, in a case that there is an odd number of responders that cannot be evenly divided into two parts, the initiator may include one more response fragment in a first part (i.e., a sub-period) of the RSF/RIF period (i.e., a range fragment period) than a second part (i.e., the other sub-period), while one dummy fragment is added to a last fragment of the second part. In a ranging shown in FIG. 26, five responders are included. As shown in FIG. 26, one dummy fragment is located at the last fragment of the second part of an RSF/RIF period, and the first part of the RSF/RIF period has one more fragment than the second part of the RSF/RIF period.

In an embodiment, each RSF/RIF period includes a first part and a second part, the first part and the second part have a same duration as a normal ranging slot. In general, the first part /second part may be set as 1200 RSTUs (i.e., 1 ms), and if there are too large number of responders to complete the response within 2 ms, the slot may be set as an integer multiple of 1200 RSTUs (i.e., 1 ms).

In an exemplary instance, as a ranging initialization message, a message control field of a poll compact frame is configured as 0xB0 or 0xC0, the poll compact frame is used for implementing efficient one-to-many DS-TWR from an initiator to two or more responders. As shown in Table 1, in a message content field, the Number of Responders is configured as two or more, and the start slot index is set as a start slot index for the ranging phase. A responder detail list illustrates details of a plurality of responders, including the responders' addresses and sequence numbers, wherein the sequence numbers represent orders of packets transmitted by the responders. As shown in Table 1:

**Table 1**

| Octets: 1 | Octets: 1 | Variable |
|---|---|---|
| Number of Responders | Start Slot Index | Responder Detail List |

In an exemplary instance, the entire RSF period includes two slots (i.e., ranging slots) and is divided equally into [ceil (1 + number of responders)/2] * 2 fragments, wherein ceil represents rounding up. In an embodiment, when one initiator and four responders are used for ranging, the 2 slots of the RSF period are equally divided into [ceil (1 +4)/2] * 2 = 6 fragment durations, wherein each fragment duration is 1/3 slot, and there are 6 fragment durations. In an embodiment, when one initiator and five responders are used for ranging, each fragment lasts for 1/4 slot. In the abovementioned ranging process, each response needs to be transmitted according to a sequence number assigned in the responder detail list, and the ranging mode is determined as DS-TWR or eSS-TWR according to the sequence number. If the sequence number is less than or equal to ceil (number of responders/2), then DS-TWR should be used; Otherwise, eSS-TWR should be used.

In an exemplary instance, for a one-to-many poll compact frame, a message content, when the value of the message control field is 0xA0, is the same as a message content when the value of the message control field is 0x90, except that the one-to-many poll compact frame indicates that both the initiator and responder devices need to transmit measurement reports.

When the value of the message control field is 0xB0, a format of the responder detail list in the message content field is shown in Table 2.

**Table 2**

| Octets: 3 | 1 |
|---|---|
| Responder Address | Sequence Number |

FIG. 27 is a schematic diagram of a structure of a ranging apparatus according to an embodiment of the present application. In this embodiment, an example is taken by each ranging fragment period including two sub-periods. As shown in FIG. 27, the ranging apparatus includes: a setting module and a ranging module.

In a case where the ranging apparatus in the embodiment of the present application is disposed at an initiator for the ranging, the setting module is configured to set a ranging fragment period including two sub-periods, and transmit and receive data with one or more UWB MMS fragments in each sub-period; and the ranging module is configured to transmit data once by the initiator and receive data replied from m responders at different time points in one sub-period, and to transmit data once by the initiator and receive data replied from the remaining (n - m) responders at different time points in time in the other sub-period; wherein, n is the number of responders, and n is an integer greater than or equal to 2; m = n and n = 2, or $m = \frac{n}{2}$ and n is an even number greater than 2, or $m = \frac{n + 1}{2}$ or $m = \frac{n - 1}{2}$ and n is an odd number greater than or equal to 3.

In a case where the ranging apparatus in the embodiment of the present application is provided at a responder for the ranging, the setting module is configured to set a ranging fragment period including two sub-periods, and transmit and receive data with one or more UWB MMS fragments in each sub-period; and the ranging module, configured to receive, by m responders, data from the initiator once and transmit the data to the initiator at different time points once in one sub-period, and to receive, by (n - m) responders, data from the initiator once and transmit the data to the initiator once at different time points in the other sub-period; wherein, n is the number of responders, and n is an integer greater than or equal to 2; m = n and n = 2, or $m = \frac{n}{2}$ and n is an even number greater than 2, or $m = \frac{n + 1}{2}$ or $m = \frac{n - 1}{2}$ and n is an odd number greater than or equal to 3.

According to the ranging apparatus in the embodiment of the present application, the UWB MMS technology is well applied to the ranging process including a plurality of responder devices, which reduces the ranging time required for the ranging phase, thereby reducing power consumption of the UWB device.

In an exemplary instance, the ranging apparatus according to the embodiment of the present application may further include a processing module configured to perform ranging according to a time of flight determined by time information of transmitting and receiving the ranging data.

A UWB device is also provided in an embodiment of the present application, including any one of the ranging apparatus according to the embodiments of the present application.

A UWB system is also provided in an embodiment of the present application. The UWB system includes at least one initiator and two or more responders.

The data transmission and reception by the initiator within a ranging fragment period includes: in each sub-period, the initiator transmits data once and receives data replied from some of all the responders at different time points.

The data transmission and reception of the responders within the ranging fragment period includes: in each sub-period, all the responders receive data from the initiator once, and some of all the responders transmit data to the initiator once at different time points.

Each ranging fragment period includes two or more sub-periods, and data are transmitted and received using one or more UWB MMS fragments in each sub-period.

In the UWB car key field, the car key can help the user find car position in underground garage based on UWB technology. Specifically, a human-computer exchanging apparatus may be provided on the car key. In the process of the user approaching the vehicle by using the human-computer exchanging apparatus, the car key continuously transmits and receives UWB signals with related devices on the vehicle, so that ranging/positioning can be performed based on the time of flight (ToF). In this way, a real-time position of the vehicle relative to the user is determined, until the user finds the position of the vehicle. During this process, as the position of the vehicle relative to the car key changes, the UWB configuration is switched multiple times for better ranging and positioning. However, the current UWB configuration switching has drawbacks, such as, low efficiency and high power consumption.

In an exemplary instance, a ranging process between UWB devices involves performing multiple ranging exchangings according to pre-configured UWB ranging configuration parameters (also referred to as short-term operating parameters). For example, UWB ranging exchanging is performed by transmitting UWB ranging frames for the purpose of obtaining measurement data required for the UWB ranging. This way can achieve a better ranging effect and an expected ranging accuracy when the radio environment is relatively stable,. However, in some scenarios (such as the low efficiency of current UWB configuration switching), there are unstable factors in the ranging effect between UWB devices.

It should be noted that the term "ranging" mentioned in this embodiment includes measurement of at least one of a distance, an angle, and a position between a plurality of UWB devices using a UWB ranging technology.

Taking UWB ranging exchanging between UWB devices in an SP0 format as an example, Table 3 shows three rates in the SP0 format and their corresponding sensitivities. As shown in Table 3, it shows some performances of ranging exchanging presented when packets in SP0 format are transmitted using different configuration parameters. The SP0 format mainly defines the three rates and corresponding sensitivities shown in Table 3 below:

**Table 3**

| Rate | Sensitivity |
|---|---|
| 110k | -110dBm |
| 850k | -105dBm |
| 6.8M | -97dBm |

It can be seen from Table 3 that the lower the rate, the better the sensitivity, then the longer the coverage distance. However, when transmitting the same data, the longer the packet length, the greater the power consumption of the transmitting antenna (TX) and receiving antenna (RX).

For a positioning process, SP3 packets are mainly used between UWB devices, as shown in FIG. 31, in which for the preamble code duration there are a total of 3 * 4, that is, 12, configurations. The longer the preamble code duration, the farther the coverage distance, and the greater power consumption of the transmitting antenna and receiving antenna.

In other words, the longer length of the SP3 packet, the greater power consumption and the better sensitivity, but the more susceptible it is interfered. In addition, affected by the electromagnetic environment, the frequency band of the channel may also be interfered. It can be seen that different configuration parameters can match different ranging requirements. In other words, for different ranging requirements suitable short-term operating parameters may be selected to achieve trade-off between the ranging success rate and ranging duration/power consumption.

In order to adapt to UWB ranging exchanging environment between multiple UWB devices, configuration parameters of the UWB devices for the ranging can be modified. For example, prior to UWB ranging exchanging between the UWB devices, a ranging session is established through BLE communication and a short-term operating parameter set is determined for the UWB exchanging. If the determined short-term operating parameters do not meet some ranging conditions, a BLE connection is re-established to update the short-term operating parameters therein to repeat the abovementioned process. This process of configuring short-term operating parameters multiple times extends an overall duration of the ranging between UWB devices due to repeated operations based on considerations such as transmission integrity. In addition, replacing short-term operating parameters multiple times even frequently may also bring problems such as low UWB configuration switching efficiency and high power consumption. Moreover, each time new short-term operating parameters are negotiated, there is a problem that a success rate for the ranging may be limited by a success rate of data transmission due to the large amount of data.

In order to solve at least one of the abovementioned technical problems, a ranging method is provided in an embodiment of the present application. By pre-storing a plurality of short-term operating parameter sets in a plurality of UWB devices participating in ranging, it is supported that the UWB device performs UWB ranging exchanging using at least one of the short-term operating parameter sets in a plurality of ranging rounds during a ranging session, thus implementing flexible adjustment of short-term operating parameters without initiating multiple short-term operating parameter negotiations during the ranging session. In this way, the ranging efficiency is higher, the power consumption is lower, the failure is less likely, and the configuration flexibility is increased.

A ranging method is provided in an embodiment of the present application, which is applied to a ranging scenario between a plurality of UWB devices. The plurality of UWB devices are classified into an initiator (i.e., the initiator for ranging) and a responder (i.e., the responder for ranging).

In some embodiments, due to practical application characteristics, for example, in vehicles and car keys with factory configuration, each of UWB devices on both sides is pre-stored with a plurality of default-configured short-term operating parameter sets. The plurality of short-term operating parameter sets may be used for the UWB ranging exchanging between the vehicle and the car key during a ranging session established between the vehicle and the car key. In some other embodiments, an initiator or a responder among the plurality of UWB devices is not pre-configured with a plurality of short-term operating parameter sets. For example, between a mobile phone and a vehicle for which a digital key is shared, a plurality of short-term operating parameter sets that is applicable during a ranging session may be determined by negotiation between the mobile phone (or vehicle) with a peer device.

With any of the abovementioned embodiments, the same or different short-term operating parameter sets can be flexibly configured between the plurality of UWB devices to perform the ranging exchanging in accordance with ranging rounds during the ranging session, thereby effectively shortening the overall duration of the plurality of rounds of effective ranging, and ensuring the ranging precision. The plurality of short-term operating parameter sets pre=stored include any parameter capable of supporting the UWB communication protocol.

In some examples, the short-term operating parameter sets include at least one or any combination of short-term operating parameters: configuration parameters required that may be configured in at least one of a control phase, a ranging phase and a report phase during one ranging session. Each of the abovementioned phases may use a same communication mechanism to perform data transmission in a corresponding phase. Alternatively, different communication mechanisms are used to perform data transmission in corresponding phases. The communication mechanism includes, for example, UWB narrowband communication, Bluetooth communication, or UWB ranging exchanging.

For example, during one ranging session, data communication between a plurality of UWB devices in the control phase, the ranging phase and the report phase is perform using the UWB ranging exchanging protocol, then each short-term operating parameter set may be used for data communication in each phase within a plurality of ranging rounds.

As another example, during one ranging session, data communication between a plurality of UWB devices in the control phase is performed using the UWB NB communication protocol, and data communication in the ranging phase and the report phase is performed using the UWB ranging exchanging protocol, and each short-term operating parameter set is applicable for performing the UWB NB communication and the UWB ranging communication between the plurality of UWB devices in the phases within a plurality of ranging rounds. For example, each short-term operating parameter set is applicable for performing the UWB NB communication between the plurality of UWB devices within the control phase, and performing the UWB ranging exchanging within the ranging phase and the report phase, within a plurality of ranging rounds.

It should be noted that the communication mechanisms used in the abovementioned phases are merely examples, and other communication mechanisms (such as BLE communication mechanism) may be used for data transmission in the control phase and/or the report phase in addition to the UWB ranging exchanging mechanism used in the ranging phase. The control phase and/or the report phase may also be used for a plurality rounds of ranging.

In some examples that compatibility with multiple communication mechanisms is considered, a short-term operating parameter set includes at least one or any combination of: a UWB narrowband channel list, a configuration of a management physical layer for the UWB ranging exchanging, a ranging configuration of a physical layer for the UWB ranging exchanging, a configuration of a management MAC layer for the UWB ranging exchanging, and a ranging configuration of a MAC layer for the UWB ranging exchanging.

As shown in FIG. 36, according to the field setting, 0 to n parameter values are configured for a same type of parameter fields in a plurality of short-term operating parameter sets, wherein n > 1. In this way, different parameter values in the fields may be combined to obtain a plurality of short-term operating parameter sets. The UWB narrowband channel list includes NB CHANNEL SEED and NB CHANNEL MAP. The management PHY configuration of the UWB ranging channel includes modulation modes such as QPSK PHY. The ranging PHY configuration of the physical layer for the UWB ranging exchanging includes UWB ranging modes such as SS-TWR and DS-TWR. The management MAC configuration of the management MAC layer for the UWB ranging exchanging, for example, includes: the number of RSFs, the number of RIFs, and the like.

For example, in FIG. 36, the NB CHANNEL SEED field may use an identifier to indicate whether an NB channel parameter is provided. If the NB CHANNEL SEED indicates to provide the NB channel parameter, the configured NB channel parameter values (such as three parameter values of NULL, channel 1 and channel 9) may be found through the NB CHANNEL MAP. These three parameters may be used by a plurality of UWB devices during a same ranging session to select to use UWB NB channel 1 or channel 9 or not to use any NB channel to transmit UWB ranging related data frames.

As another example, various types of parameters adopted in the Ranging PHY Configuration included in the Management PHY Configuration field are managed in a short term (or long term) to distinguish a valid duration/round of a PHY parameter portion in the adopted UWB configuration ranging parameter set. Ranging PHY Configuration includes, but is not limited to, the following parameter types: Sequence Code Index, MMRS complementary set zeros, N_MSR, STS fragment Length, UWB channel, Reserved, etc. Each parameter type may be configured with 1 to n parameter values, for a plurality of UWB devices to select during a same ranging session.

As another example, various types of parameters adopted in the Ranging MAC Configuration included in the Management MAC Configuration field are managed in a short term (or long term) to distinguish a valid duration/round of a MAC parameter portion in the adopted UWB configuration ranging parameter set. Ranging MAC Configuration includes, but is not limited to, the following types: the number of RSFs, the number of RIFs, reserved, etc. Each parameter type may be configured with 1 to n parameter values for a plurality of UWB devices to select during a same ranging session.

In an example including, but is not limited to, a joint mode of the abovementioned NB communication mechanism and the UWB ranging exchanging mechanism, short-term operating parameters in each set include at least one of the following items: channel identifier, configuration parameters of ranging packets, and the like. Depending on the protocol used during the ranging session, the short-term operating parameters may further include at least one of the following: transmit power, payload rate, the number of RSFs, the number of RIFs, etc.

The channel identifier is used to indicate the channel number occupied by performing the ranging exchanging.

The transmit power represents information related to power at which a UWB signal is transmitted by the present device, such as whether to adjust the transmit power, adopted transmit power, or a difference between a current transmit power and a maximum transmit power, etc. For example, the configuration parameters include whether to submit a Power Headroom Report (PHR).

Payload rate represents a rate of packets for the ranging exchanging.

In addition, each short-term operating parameter set is also related to the ranging exchanging mode.

In some examples, as shown in FIG. 32, the ranging mode between two UWB devices is to perform ranging exchanging once within a same ranging round 1 in a same ranging block 1. By selecting one ranging round among a plurality of ranging blocks to perform the ranging exchanging, ranging precision can be improved. During the plurality of rounds of ranging exchanging, both UWB device sides may need to use configuration parameters of a plurality of ranging packets, such as Preamble code, number of symbols (N sync) and other parameters. In this way, before the ranging, both UWB device sides negotiate a plurality of short-term operating parameter sets including the abovementioned parameters.

In some other examples, receiving and transmitting operations performed by the two UWB devices in sequence may be referred to as performing fragment operations in a ranging sequence. In a ranging exchanging process, an operation of two UWB devices cooperating to transmit and receive UWB signals is referred to as performing a phase, for short. In order to reduce UWB electromagnetic radiation, as shown in FIG. 33, one round of ranging exchanging between two UWB devices is, for example, as follows: a fragment RSF1 indicates the following exchanging process: the initiator transmits a first UWB signal within a set time fragment, and the responder feeds back a second UWB signal. Thus, the initiator and the responder sequentially perform the fragment operation according to a fragment sequence set for one round of ranging exchanging, to obtain measurement data required for ranging calculation. In order to improve the UWB ranging sensitivity, the two UWB devices perform N rounds of ranging exchanging. To enhance information security, the two UWB devices further perform M rounds of ranging exchanging. The number M of the M rounds of ranging is set according to the communication security of the two UWB devices. N and M may be the same or different. For ease of distinction, fragments involved in the M rounds of ranging exchanging are referred to as Ranging Integrity Fragments (RIFs).

In order to perform the ranging exchanging in the abovementioned example, configuration parameters of ranging packets related to different RSFs or RIFs, the number of RSFs, the number of RIFs, and the like may be configured in the plurality of short-term operating parameter sets.

The ranging packet may include a plurality of Multi-Millisecond Ranging Sequence (MMRS) symbols. Each MMRS includes a clock synchronization symbol (or SYNC for short) and a Start Frame Delimiter (SFD). The clock synchronization symbol contains a plurality of preambles. Accordingly, each short-term operating parameter set may further include configuration parameters of ranging packets, such as the number of MMRS symbols, selected preambles in each MMRS and the number thereof, and the like.

The above description is only an exemplary description provided for short-term operating parameters. In some embodiments, UWB parameters and parameter ranges required for a short-term operating parameter set, such as power and its value range, may also be determined according to scenarios, requirements, and the like.

In order to facilitate identifying different short-term operating parameter sets from the plurality of short-term operating parameter sets, each short-term operating parameter set is also associated with at least one index. Each index may be associated with one or more short-term operating parameter sets. For example, indices are associated with short-term operating parameter sets in one-to-one correspondence.

In some examples, a same short-term operating parameter set may be configured between a plurality of UWB devices with a smaller amount of data by transmitting the index. For example, the index is described by a data structure such as an array or a tree structure according to the type of parameters involved in short-term operating parameter sets, to associate a short-term operating parameter set, or even parameters in a short-term operating parameter set. As another example, parameters are grouped according to various types of pre-stored parameters and their parameter values, wherein each group constitutes one short-term operating parameter set, and each short-term operating parameter set is associated with one index.

In some other examples, each index is associated with a plurality of short-term operating parameter sets, and a plurality of UWB devices may select a same short-term operating parameter set among them for the UWB ranging exchanging, in conjunction with a timing policy as an example.

In other words, the short-term operating parameter set is associated with at least one index, and indices associated with different short-term operating parameter sets are not exactly the same, so that the UWB initiator and/or the UWB responder may negotiate at least one round of short-term operating parameter set to be used subsequently by exchanging an index of a short-term operating parameter set (an index associated with the short-term operating parameter set, or an index set of short-term operating parameter sets included in a short-term operating parameter set) and/or indices of short-term operating parameters. One short-term operating parameter set contains an index set of short-term operating parameter sets. The index set may be represented by an array, a tree structure, etc.

It should be noted that some parameters in a plurality of short-term operating parameter sets may be shared by, or default values for different short-term operating parameter sets, and these parameters may be not negotiated, or may be provided by one short-term operating parameter set. In other words, the parameter types and their values of a short-term operating parameter set include those confirmed by negotiation, and may also include default configurations, etc.

In order to allow a plurality of UWB devices to negotiate to determine a plurality of short-term operating parameter sets and flexibly configure them in a ranging session, FIG. 28 illustrates an exemplary ranging method in an embodiment of the present application. It should be noted that if a plurality of short-term operating parameter sets configured by default are pre-stored in a plurality of UWB devices, the following act 2801 may be skipped.

In the act 2801, a plurality of short-term operating parameter sets are determined by negotiation.

In an act 2802, UWB ranging exchanging is performed using at least one short-term operating parameter set within a plurality of ranging rounds during one ranging session.

In an exemplary instance, a plurality of UWB devices determine and store a long-term parameter to maintain the same ranging session during an initialization phase of the ranging session. The long-term parameter includes, for example, device information of a peer device side, etc. During the initialization phase of the ranging session, or after the ranging session is established, the UWB devices may negotiate a plurality of short-term operating parameter sets that the devices need to store, to obtain at least two short-term operating parameter sets, respectively. Thus, if a current short-term operating parameter set needs to be changed during a ranging session, switching may be performed directly between the negotiated short-term operating parameter sets, or other control policies may be adopted, thus improving a switching success rate and switching efficiency of the UWB configuration.

In some embodiments, long-term parameter(s) and a plurality of short-term operating parameter sets may be negotiated through the OOB communication (such as Bluetooth Low Energy (BLE), local area network and the like), so as to reduce power consumption and achieve high data transmission efficiency. In some other embodiments, the long-term parameters and the plurality of short-term operating parameter sets may also be negotiated through the UWB ranging exchanging or UWB narrowband (i.e., UWB NB) communication mode, so as to reduce the cost of the device, and can implement ranging and data transmission without relying on other communication modules, which is beneficial to simplifying the structure of the apparatus or the device, and is more applicable for application scenarios such as car key that has certain requirement on the volume of the device.

In order to negotiate and determine a same short-term operating parameter set, one UWB device informs the peer device of a plurality of short-term operating parameter sets through advertising, peer-to-peer communication, or the like. Alternatively, for a plurality of UWB devices on which ranging will be performed, negotiation is initiated by one side, and the peer side screens, so that it is to determine that the same short-term operating parameter set is applicable to both sides in a request-response manner.

Taking the UWB narrowband communication mode for negotiation as an example, as shown in FIG. 34, among (n+1) UWB devices, the initiator establishes ranging session connections with n responders (Responder1,..., Responder n) respectively, so as to configure a plurality of short-term operating parameter sets for the corresponding ranging sessions.

For example, the initiator is configured to support functions of higher layers, to obtain a UWB narrowband communication mode, start time, interval and the like for performing negotiation, and advertise an Advertising Poll Compact frame (ADV POLL frame for short) to one or more responders expected to respond. The number of slots of a Contention Access Period (CAP), which starts from the end of the ADV PLL frame, is set in the ADV POLL frame. The CAP is composed of a plurality of initialization slots, a duration of an initialization slot is specified in the ADV POLL frame. After transmitting the ADV POLL frame, the initiator listens for one or more incoming advertising response compact frames (ADV RESP frames for short) in each subsequent CAP. For one or more of the n responders configured to perform ranging exchanging with the initiator, after receiving the advertising poll compact frames, one of the initialization slots in the CAP is randomly selected and an ADV RESP frame is transmitted at the starting of the selected initialization slot. When CAP ends, the initiator initiates an advertising confirmation compact frame (ADV CONF frame for short) or a Start of Ranging compact frame (SOR frame for short).

During the abovementioned exchanging, the initiator and each responder may negotiate a plurality of short-term operating parameter sets using at least one of the ADV RESP frame, the ADV CONF frame, or the SOR frame. For example, a field containing a plurality of short-term operating parameter sets is provided in the ADV RESP frame to request to use the short-term operating parameters therein during the ranging session. The request may be confirmed or modified by a response from the peer device. As another example, a field involved in the plurality of short-term operating parameter sets is configured in the ADV CONF frame to confirm that a plurality of short-term operating parameter sets can be used during the ranging session. As another example, fields as shown in FIG. 36 are provided in the SOR frame to confirm that a plurality of short-term operating parameter sets are used during the ranging session.

It should be noted that other operations performed during the slots in which the initiator and the responders transmits and receives different data frames are also shown in FIG. 34, such as a scan operation (SCAN) of a responder, which indicates that the ADV POLL frame is received by scanning the UWB NB channel to establish UWB NB communication between the initiator and the responders. The abovementioned scanning scheme may be replaced with other response modes, such as providing with a designated initialization channel for establishing UWB NB data frame exchanging by default. Different mechanisms for establishing communication are related to protocols used.

With the abovementioned data frames, a plurality of UWB devices in a same ranging session may apply a plurality of negotiation modes to obtain a plurality of short-term operating parameter sets.

In some examples, the initiator and the each responder may apply a single-sided set negotiation mode. For example, at least one of the plurality of responders transmits an expected plurality of short-term operating parameter sets to the initiator via an ADV RESP frame, and the initiator receives and performs subsequent UWB ranging exchanging in accordance with the expected plurality of short-term operating parameter sets.

In yet other examples, a plurality of responders transmit the ADV RESP frame to request a plurality of short-term operating parameter sets, the initiator selects at least two short-term operating parameter sets that are selectable during the ranging session, and transmits them to the respective responder via the ADV CONF frame (or SOR frame). For example, the sway of selecting may, for example, include at least one of: according to the detected channel quality, a positional relationship, obtained by other measurement ways, that is not higher than the precision of UWB ranging, or a measurement policy of an upper layer application. The channel quality includes, for example, channel noise, signal-to-noise ratio, energy of transmitted/received signals, and the like. The positional relationship includes, for example, a positional relationship obtained by positioning using Bluetooth or a cellular network. The measurement policy of the upper layer application includes, for example, the number of measurements, or measurement frequency, or etc., which is set based on inside and outside the preset welcome area.

In some other examples, the initiator and each responder may apply a mutually confirmed negotiation mode. For example, one of the responders transmits available or unavailable short-term operating parameters to the initiator via the ADV RESP frame, the initiator determines at least two short-term operating parameter sets for subsequent ranging exchanging based on the collected available or unavailable short-term operating parameters and transmits them to corresponding responders via the ADV CONF frame (or SOR frame).

It should be noted that various short-term operating parameters transmitted in the abovementioned examples may be represented by identification indices, compressed codes, or the like, to reduce the amount of data to be exchanged.

Considering that there is a situation in which frequency bands of different radio communication mechanisms (such as UWB narrowband communication and Wi-Fi) are at least partially overlapped, in order to prevent mutual interference, the process of negotiating to determine the plurality of short-term operating parameter sets further includes an act of performing a Clear Channel Assessment (CCA).

For example, when the initiator or the responder transmits a plurality of short-term operating parameter sets using the UWB NB channel, a channel duty cycle per unit time may be large, for example, the channel duty cycle during 1 second is > 2.5%. For an NB channel including a frequency band shared with Wi-Fi, channel usage collision is possible when such data frames are transmitted. Thus, the initiator or the responders perform CCA detection on the channel before transmitting the signal frame. The CCA detection includes, but is not limited to, assessment of at least one or a combination of the following parameters reflecting channel/signal conditions: a signal strength of packets transmitted in the channel, a device spacing estimated based on energy of transmitted and received packets, a environmental noise strength, an occupancy situation of synchronization symbols in packets, an allocation situation of time slices on the channel, and the like.

Compared with a solution in which a short-term operating parameter set is negotiated once, this scheme can reduce a frequency of CCA detections. Specifically, as wireless communication networks expand their coverage, the solution in which a short-term operating parameter set is negotiated once may encounter channel collision in a greater probability, which leads to more frequent CCA detections, and increase of the probability of retransmission and missed transmission in the negotiation process. Therefore, transmitting at least two short-term operating parameter sets using one negotiation opportunity improves the transmission efficiency of short-term operating parameters required for the ranging session. Based on this, since a plurality of short-term operating parameter sets can be replaced with indices with less data amount, the way of transmitting indices can effectively reduce the transmitted data amount in subsequent ranging exchanging process, thereby reducing the probability of channel collision.

When a plurality of UWB devices of the ranging session are configured with a plurality of short-term operating parameter sets, each UWB device participating in ranging performs UWB ranging exchanging using one of the short-term operating parameter sets in any ranging round during one ranging session. The short-term operating parameter sets used in different ranging rounds may be the same or different. A short-term operating parameter set used in one of the ranging rounds may be determined using an index carried by any previous communication. The index may be provided in any of the following exemplary data frames: an ADV CONF frame of UWB NB communication, an SOR frame of UWB NB communication; a Pre Poll frame of the UWB ranging exchanging, a Poll frame of the UWB ranging exchanging, a Final Data frame of the UWB ranging exchanging, a Final frame, a Ranging Initiation Message (RIM) of the UWB ranging exchanging, a Ranging Response Message (RRM) of the UWB ranging exchanging, a Ranging Final Message (RFM) of the UWB ranging exchanging, a Measurement Report Message (MRM) of the UWB ranging exchanging, a Ranging Result Report Message (RRRM) of the UWB ranging exchanging; or a data frame with a similar function to those of the abovementioned data frames provided by other communication modes such as BLE communication.

In some embodiments, short-term operating parameter sets used in different ranging rounds may be ordered by default in advance. In the negotiation operation in the act 2801 or in the default setting, both the responders and the initiator also agree on a policy for switching different short-term operating parameter sets. Thus, according to the policy, the responders and the initiator apply matched short-term operating parameters in different ranging rounds of the ranging session. Examples of the policy include setting a same switching period, a same switching order, or configuring an index generation algorithm, etc.

In some other embodiments, short-term operating parameters used in different ranging rounds may be negotiated by the responders or the initiator with the peer device by instructions. In this way, the initiator or the responders transmit a packet carrying the to-be-switched short-term operating parameter set or a corresponding index to the peer device for subsequent switching.

That is, during the ranging session, the UWB initiator negotiates with the UWB responders a same short-term operating parameter set used in at least one round of UWB ranging exchanging. The UWB initiator negotiating with the UWB responders the same short-term operating parameter set used in at least one round of UWB ranging exchanging, includes: the UWB initiator indicates one short-term operating parameter set to the UWB responders, and/or the UWB responders request the UWB initiator a short-term operating parameter set, or a short-term operating parameter conforming to the at least one short-term operating parameter set.

Taking the initiator and the responders to transmit the indices in the UWB ranging exchanging mode as an example, the initiator uses a start frame (such as a Pre Poll frame, a Poll frame, or an RIM frame) and/or an end frame (such as a Final data frame, or an MRM frame, etc.) to carry a configuration index in an i-th ranging round to inform a responder to use corresponding short-term operating parameters in an (i + j) th ranging round. When receiving the index, the responder performs the UWB ranging exchanging according to the short-term operating parameter set corresponding to the index in the (i + j) th ranging round, wherein i is an index of the ranging round, j is an offset of the ranging round, and j ≥ 1. With the UWB ranging exchanging, the time spent on switching communication modes can be reduced, improving the ranging efficiency.

In some other examples, after receiving the index from the peer device, the responder or the initiator may further confirm whether it is required to switch to a short-term operating parameter set recommended by the peer device for two-way negotiation.

Thus, the ranging method further includes the following acts: responding to the request information from the peer device to determine another short-term operating parameter set, or transmitting indices of available or unavailable short-term operating parameter sets to the peer device for the peer device to provide one short-term operating parameter set again for use in subsequent ranging rounds.

For example, as shown in FIG. 35, by transmitting a start frame (POLL) using the UWB NB communication before a UWB ranging exchanging, the initiator informs each responder of the short-term operating parameter set (or index thereof) used for the current UWB ranging exchanging. Accordingly, the responders (Responder 1,..., Responder n) feed back a ranging response frame (RESP) for confirmation. Thus, the initiator and the responders perform UWB ranging exchanging with the same UWB configuration parameters. After the ranging exchanging, the initiator and the responders complete the exchanging of ranging data using the UWB NB, that is, perform data exchanging using a REPORT frame. Utilizing UWB NB communication can bring the advantage of reduced power consumption.

In order to allow both ranging sides to jointly use the changed short-term operating parameter set, the UWB responder feeds back the short-term operating parameter set in the report phase for use in a subsequent corresponding round of UWB ranging exchanging, or the UWB initiator negotiates with the UWB responders during the abovementioned control phase of the ranging session. The transmission modes used in the report phase and/or the control phase may refer to the aforementioned modes.

It can be understood that the index has less information amount than the information amount of the short-term operating parameter set itself, the mode of transmitting the index allows less information transmitted, and is especially more suitable for the characteristics of the communication mode of the UWB ranging exchanging technology, i.e., carrying less information, without increasing additional power consumption.

During a ranging session, the short-term operating parameter set may be replaced, which is not limited to, periodically or by negotiating. In order to avoid a situation in which switching timing between different devices results in inconsistent configuration parameters of both side devices for ranging, the initiator and the responder may also reserve a delay time for using of the switched short-term operating parameter set, to ensure that both side devices adopt the same short-term operating parameter set in the same subsequent ranging round.

In order to solve the abovementioned problems, the ranging method in the embodiment of the present application further includes: receiving or transmitting an effective time of one of the short-term operating parameter sets. In this way, by reserving a delay time for asynchronous switching operations, it is ensured that both the initiator and the responder can apply a same short-term operating parameter set in subsequent ranging exchanging, avoiding the problem of ranging failure caused by inconsistent switching. The effective time includes, for example, any one of the following: an offset determined based on a reference time point, a round value, or an activation time point.

For example, a data frame in which an index is transmitted further includes a subsequently specified ranging block index and a ranging round index, to indicate that ranging exchanging is performed within a corresponding ranging round using the short-term operating parameter set corresponding to the index. Alternatively, a default or specified delay time or an activation time point determined based on a synchronous clock system is transmitted or received, so that the initiator and the responder complete the configuration operation of switching the short-term operating parameter set within the delay time or before the activation time point, and use updated short-term operating parameters to perform the ranging exchanging after the delay time expires or when the activation time point arrives. Alternatively, the short-term operating parameter set is used during a next round of ranging exchanging.

In some cases, transmitting and receiving of the data frame carrying the index may fail due to affection of the environment or devices. The ranging method further includes the act of retransmitting the data frame. In this way, through retransmission, ranging devices on both sides perform switching operations, and the switching success rate is further improved. For example, the initiator retransmits the data frame when receiving of responded information of the initiator is time-out. Alternatively, when a responder detects that the short-term operating parameter set currently used does not conform to the current environment and does not receive the data frame from the initiator, the responder may transmit information requesting switching to implement the data frame retransmission.

A decision of replacing the short-term operating parameter set may be determined based on the detection that some or all of the current short-term operating parameters are not applicable for ranging, or periodic replacement. The detection mode of replacing the current short-term operating parameters is related to at least one of communication security, environmental interference, ranging efficiency improvement, reduction of power consumption, etc. For example, as mentioned in the aforementioned example, the switching operations are performed according to at least one of: periodic switching, response to request information of the peer device, the transmission and reception of UWB packets and/or the allocation of UWB resource, and switching to another short-term operating parameter set according to a switching instruction from a data interface, which are explained one by one below. Periodic switching means that switching is performed according to a period duration, the number of periodic ranging exchangings, and the like.

Response to the request information of the peer device means that the peer device detects that another short-term operating parameter set needs to be switched to, request information triggering the switching is transmitted. The request information may be, for example, the aforementioned instruction or information for requesting the switching.

It is to detect whether the current short-term operating parameters match with the current ranging environment according to the transmission and reception of the UWB packets and/or the allocation of the UWB resource.

The transmission and reception of the UWB packets includes at least one of the following information: a signal strength of the received UWB packets, a distance between the UWB initiator and the UWB responder determined based on the transmitted and received UWB packets, an environmental noise strength determined based on the transmitted and received UWB packets, and a power consumption of transmitting the UWB packets. The UWB packet includes any UWB signal frame required for the ranging exchanging process, and examples thereof include, but are not limited to, an SOR frame, a ranging response frame, a ranging end frame, and the like. The SOR frame represents a signal frame indicating that ranging is started for ranging calculation, and according to different UWB ranging protocols, the SOR frame, for example, includes at least one of the following: a Pre Poll frame, a Poll frame, an RIM frame, and the like. The ranging response frame represents a signal frame that responds to the SOR frame for ranging calculation, such as a response frame, etc. The ranging end frame represents a signal frame that informs the peer device of the end of the ranging exchanging, such as a Final data frame, a Final frame, an MRM frame, an RRRM frame, a CRUM frame, etc. Any UWB device participating in the ranging may detect the transmission and reception of the UWB packets by signal processing, and estimate whether to perform switching according to the detected data indicating the transmission and reception situation.

The allocation of the UWB resources includes at least one of the following information: allocation of channels, allocation of preambles on the channel, and allocation of time slices on the channel. Of course, the above description is just an example, and does not mean that the transmission and reception of the UWB packets and the allocation of the UWB resources can only or necessarily include the abovementioned information, which is not be repeated here. Different from the transmission and reception situation, the UWB device participating in the ranging may also detect the occupancy, channel quality and the like of a channel to be used, or other channels in a gap of performing ranging exchanging or without a necessary timing relationship with the ranging exchanging, may even detect whether the time slices of ranging exchanging between its own device and a plurality of peer devices conflict, and trigger a switching operation in time according to the detected result.

The short-term operating parameter set is switching to another short-term operating parameter set according to a switching instruction from the data interface. For example, the switching instruction of the data interface comes from, for example, an upper layer application of the UWB device. For example, the upper layer application includes an application for finding a lost device, an application for setting a usage permission, and the like. According to the scheduling policy involved in operations of the upper layer application, a switching instruction is generated. In this way, when detecting the switching instruction, the UWB device transmits an identifier of another short-term operating parameter set to the peer device to perform a next round of ranging exchanging using switched short-term operating parameters.

In addition, when the UWB device performs ranging exchanging with a plurality of peer devices, the UWB device may use a positioning method such as a three-point positioning method to achieve positioning, which is not repeated here.

The act division of the above various methods is only for clarity of description. When implemented, it may be combined into one act or some acts may be split and decomposed into multiple acts. As long as they include the same logical relationship, they are all within the scope of protection of this patent. When insignificant modifications or introduce insignificant designs are added to algorithms or processes without changing the core designs of algorithms and processes, modified algorithms or processes are still within the scope of protection of this patent.

A UWB network is also provided in another aspect of the embodiment of the present application. As shown in FIG. 29, the UWB network includes a UWB initiator 2901 and at least one UWB responder 2902, wherein the UWB initiator 2901 and the UWB responder 2902 are used to cooperate each other to implement the ranging method as described in any one of the embodiments of the present application.

It is not difficult to find that this embodiment is a network embodiment corresponding to the method embodiments, and this embodiment may be implemented in cooperation with the method embodiments. The related technical details mentioned in the method embodiments are still valid in this embodiment, and in order to reduce repetition, details thereof are not repeated here. Accordingly, the related technical details mentioned in this embodiment may also be applied to the method embodiments.

An integrated circuit is also provided in another aspect of the embodiment of the present application. As shown in FIG. 30, the integrated circuit includes a communication module 3001 and a ranging module 3002. The communication module 3001 is connected to the ranging module 3002.

The communication module 3001 is configured to negotiate to determine long-term parameter(s) and a plurality of short-term operating parameter sets during a ranging session. The ranging module 3002 is coupled to the communication module 3001 and performs UWB ranging exchanging using at least one of the short-term operating parameter sets in a plurality of ranging rounds during the ranging session. The long-term parameter(s) is a parameter(s) that maintains the ranging session, such as device information of each UWB device participating in the ranging. The plurality of short-term operating parameter sets are selectively used by the plurality of UWB devices in various rounds of UWB ranging exchanging during the ranging session. The long-term parameter(s) and the plurality of short-term operating parameter sets are shared with the local ranging module 3002.

According to the data exchanging mode used by the set communication module and the ranging module, the communication module and the ranging module may be discrete radio frequency chips, or the communication module and the ranging module may include a common UWB transceiver circuit.

Optionally, the integrated circuit may further include a data processing module that is configured to further process received digital signal to obtain a measurement result. Alternatively, the integrated circuit may be a UWB chip.

It should be noted that the above description is merely an exemplary explanation, and in some embodiments, the communication module and the ranging module may also be integrated into a same module. For example, the data transmission involved in the foregoing acts is implemented by a UWB transceiver circuit, which is not repeated here.

This embodiment is a circuit embodiment corresponding to the method embodiments, and this embodiment may be implemented in cooperation with the method embodiments. The related technical details mentioned in the method embodiments are still valid in this embodiment, and in order to reduce repetition, details thereof are not repeated here. Accordingly, the related technical details mentioned in this embodiment may also be applied to the method embodiments.

It is worth mentioning that various modules involved in this embodiment is logic modules, and in practical applications, one logic unit may be a physical unit, a part of a physical unit, or may be implemented by a combination of a plurality of physical units. Furthermore, in order to highlight the innovative part of the present application, units that are not closely related to the solution for solving the technical problems proposed in the present application are not introduced in this embodiment, but this does not mean that there are no other units in this embodiment.

Furthermore, in order to highlight the innovative part of the present application, units that are not closely related to the solution for solving the technical problems proposed in the present application are not introduced in this embodiment, but this does not mean that there are no other units in this embodiment.

An electronic device is involved in another embodiment of the present application, the electronic device includes an antenna, and the integrated circuit as previously described. The integrated circuit is connected to the antenna for ranging, or positioning by the ranging.

When the antenna and the integrated circuit are not integrated into an integrated device, the integrated circuit is connected to the antenna through a first transmission line that may be a Printed Circuit Board (PCB) trace. The carrier may be a Printed Circuit Board (PCB), such as a development board, a data acquisition board, or a motherboard of a device, which is not described in detail here.

The structure and operation principle of the integrated circuit included in the UWB device have been described in detail in the abovementioned embodiments, which is not described in detail here.

The radio device may also be mounted on a device, in particular as a device body.

In some embodiments, the electronic device may be disposed outside the device body. In some other embodiments, the electronic device may be also disposed inside the device body. In some other embodiments, the electronic device may be partially disposed inside the device body and partially disposed outside the device body, The embodiments of the present application are not limited thereto, specific implementations depend on situations.

It should be noted that the electronic device may implement functions such as target detection by transmitting and receiving radio signals to provide measurement information of the detected target to the device body, and thus assist or even control the operation of the device body. The measurement information includes, for example, at least one of a relative distance, a relative speed, and a relative angle.

In some embodiments, the device body may be a component and product for applications in fields such as transportation, consumer electronics, monitoring, in-cabin detection, and health care. For example, the device body may be smart transportation device (such as automobile, motorcycle, ship, subway, trai, etc.), security device (such as cameras), liquid level/flow rate detection device, smart wearable device (such as bracelet, glasses, etc.), smart home device (such as frequency sweeping robot, door lock, television, air conditioner, smart light, etc.), various communication devices (such as mobile phone, tablet computer, etc.), as well as road gate, smart traffic light, smart sign, traffic camera and various industrial mechanical arms (or robots), etc. The device body may be various instruments for detecting vital signs parameters and various devices equipped with the instruments, such as detection in automobile cabin, indoor personnel monitoring, intelligent medical device, consumer electronic device, etc.

In some embodiments, when the abovementioned device body is applied to an Advanced Driving Assistance System (ADAS), the electromagnetic wave electronic device serving as an in-vehicle electronic device may provide various functional safety guarantees for the ADAS system such as Autonomous Emergency Braking (AEB), Blind Spot Detection (BSD), Lane Changing Assist (LCA), and Rear Cross Traffic Alert (RCTA).

In order to facilitate those skilled in the art to better understand the combination of method embodiments and embodiments of, such as, networks, circuits and the like, they will be described below by examples.

First, after an initiator (a car key equipped with the integrated circuit as described above) enters a UWB network where a certain underground garage is located, the initiator will establish a BLE connection with a responder (equipped with the integrated circuit as described above) installed on the corresponding car through respective communication modules, and negotiate at least two short-term operating parameter sets through a session created based on the BLE connection. Each short-term operating parameter set is configured with an index locally, and a same index may be mapped between UWB devices playing different roles.

The communication module of the responder (or the initiator) transmits the negotiated one or more short-term operating parameter sets to the ranging module, so that each ranging module of the responder and the initiator performs ranging exchanging with one of the one or more short-term operating parameter sets. Over time, changes in signal quality, distance between the initiator and responder, environmental interference, and power optimization requirements may lead to mismatch with the short-term operating parameters corresponding to the default values. Upon detecting such a situation, either the responder or the initiator may perform configuration adjustment according to the detection and select an appropriate configuration based on the current situation.

For example, in a case of a short distance and a good signal, a configuration with a short preamble may be selected to save power.

As another example, in a case of a strong channel interference and a short distance, a frequency point with small interference is selected and a configuration with a short preamble is selected, to avoid interference.

For another example, the initiator is a controller. In this case, if the initiator transmits the index to the responder, the responder switches to the short-term operating parameters recommended by the initiator together with the initiator when the timing of the future effective indication arrives after the index and the future effective time are obtained by parsing. If the responder transmits the index to the initiator, the initiator also verifies the short-term operating parameter set recommended by the responder, and returns the verified result to the responder through the UWB connection. For example, an index of a new recommended short-term operating parameter is returned, or a short response frame is returned, or an index recommended by the responder is returned.

Thus, according to the ranging method, the UWB network, the integrated circuit, and the electronic device provided in the embodiment of the present application, a plurality of sets of configurations may be distributed to the UWB device at one time, and the UWB device can be supported to quickly perform configuration switching according to the requirements of signal energy, interference degree, and power consumption optimization, so that the UWB device can quickly adapt to changes of environment, power consumption, signal and the like, and obtain benefits in the following aspects, such as improving positioning success rate, reducing power consumption, and improving system stability.

Examples disclosed herein are summarized as follows.

In some embodiments, a ranging method for a UWB device is provided, wherein a plurality of short-term operating parameter sets are stored in the UWB device. One of the short-term operating parameter sets is used by the UWB device in one round of UWB ranging exchanging during one ranging session. The method includes: performing UWB ranging exchanging using at least one of the plurality of short-term operating parameter sets in a plurality of ranging rounds during the ranging session.

In some embodiments, each of the short-term operating parameter sets is associated with at least one index.

In some embodiments, the short-term operating parameter sets are associated with indices in one-to-one correspondence.

In some embodiments, the method further includes: obtaining the plurality of short-term operating parameter sets in a negotiated manner using UWB narrowband communication, UWB communication, or out-of-band communication; or storing the plurality of short-term operating parameter sets by default.

In some embodiments, the method further includes: transmitting, during the ranging session, an effective time using a short-term operating parameter set therein.

In some embodiments, the method further includes: transmitting an index using the UWB narrowband communication, out-of-band communication, or the UWB communication in at least one of the control phase or report phase during the one ranging session, for the UWB device to perform the UWB ranging exchanging using a short-term operating parameter set corresponding to the index in at least one subsequent ranging round.

In some embodiments, at least one used short-term operating parameter set is determined according to at least one of: periodic replacement; response to request information of the peer device; transmission and reception of UWB packets and/or allocation of UWB resources; and instructions from a data interface.

In some embodiments, the transmission and reception of the UWB packet includes at least one piece of the following information: a signal strength of received UWB packet, a distance between the UWB initiator and the UWB responder determined based on the transmitted and received UWB packets, an environmental noise strength determined based on the transmitted and received UWB packets, and a power consumption of the transmitted UWB packets. And/or the allocation of the UWB resource includes at least one piece of the following information: allocation of a channel, allocation of preambles on a channel, and allocation of time slices on a channel.

In some embodiments, at least one short-term operating parameter set is used to configure parameters required in at least one of a control phase, a ranging phase, or a report phase during one ranging session.

In some embodiments, the at least one short-term operating parameter set includes at least one or a combination of: a UWB narrowband channel list, a configuration of a management physical layer for the UWB ranging exchanging, a ranging configuration of a physical layer for the UWB ranging exchanging, a configuration of a management MAC layer for the UWB ranging exchanging, and a ranging configuration of a MAC layer for the UWB ranging exchanging.

In some embodiments, the at least one short-term operating parameter set includes at least one or a combination of: a channel identifier, a configuration parameter of a ranging packet, a data rate, a transmit power, the number of RSFs, and the number of RIFs.

In some embodiments, the method further includes: transmitting an instruction indicating switching, to perform the UWB ranging exchanging using at least two short-term operating parameter sets in different ranging rounds.

In some embodiments, the method further includes: performing a clear channel assessment.

In some embodiments, the UWB device further stores a long-term parameter for maintaining the ranging session.

In some embodiments, a UWB network is provided. The UWB network includes a UWB initiator and a UWB responder, wherein during a UWB ranging session, one of the UWB initiator and the UWB responder performs any of the aforementioned ranging method.

In some embodiments, there is provided an integrated circuit including: a communication module and a ranging module. The communication mode is connected to the communication module; the communication module is configured to negotiate to determine a plurality of short-term operating parameter sets during a ranging session, and transmit the plurality of short-term operating parameter sets to the ranging module; the ranging module is coupled with the communication module, and is configured to perform UWB ranging exchanging using at least one short-term operating parameter set therein in a plurality of ranging rounds during the one ranging session.

In some embodiments, the communication module and the ranging module include a common UWB transceiver circuit.

In some embodiments, an electronic device is provided. The electronic device includes an antenna and the integrated circuit in any of the abovementioned embodiments connected to the antenna.

Also provided in some embodiments is a ranging method for a UWB initiator and a UWB responder to perform a UWB ranging exchanging, wherein a same plurality of short-term operating parameter sets are stored in the UWB initiator and the UWB responder. During a ranging session, the UWB initiator negotiates with the UWB responder a same short-term operating parameter set used in at least one subsequent round of the UWB ranging exchanging, including: the UWB initiator indicates one of the short-term operating parameter sets to the UWB responder; and/or the UWB responder requests the UWB initiator one of the short-term operating parameter sets, or short-term operating parameters conforming to at least one of the short-term operating parameter sets.

In some embodiments, the method further includes: the UWB responder feeds back an available short-term operating parameter set to confirm to use it in a subsequent corresponding round of the UWB ranging exchanging.

In some embodiments, each of the short-term operating parameter sets is associated with at least one index, the UWB initiator and/or the UWB responder use an index to replace transmitted short-term operating parameters and/or short-term operating parameter set.

In some embodiments, the method further includes: utilizing an SOR frame transmitted by the initiator and/or an RESP frame transmitted by the receiving device to enable the UWB initiator and the UWB responder to obtain a same plurality of short-term operating parameter sets.

In some embodiments, the UWB initiator and the UWB responder perform the abovementioned negotiation using UWB narrowband communication, UWB communication, or out-of-band communication.

In some embodiments, a single short-term operating parameter set includes parameters used by the UWB initiator and the UWB responder when exchanging is performed in at least one of a control phase, a ranging phase, and a report phase during a ranging session.

In some embodiments, a process in which the UWB initiator negotiates with the UWB responder is in the control phase during the ranging session described above.

In some embodiments, the UWB responder feeds back the short-term operating parameter set used during the report phase to confirm to use the short-term operating parameter set in a subsequent corresponding round of UWB ranging exchanging.

In some embodiments, at least one of the subsequent rounds of UWB ranging exchanging is a next round of ranging exchanging.

Also provided in an embodiment of the present application is a ranging method including any combination of the following items.
1). Short-term operating parameters are configured in a ranging control phase, includes:
   the initiator negotiates with the responder a same short-term operating parameter set used in at least one round of UWB ranging exchanging, wherein the initiator negotiating with the responder the same short-term operating parameter set used in the at least one round of UWB ranging exchanging, includes:
   the initiator indicates a short-term operating parameter set to the responder; and/or,
   the response requests an initiator for a short-term operating parameter set, or short-term operating parameters conforming to at least one short-term operating parameter set;
   wherein the initiator and the responder store a same plurality of short-term operating parameter sets.
2). A first exchanging packet immediately upon entering the ranging phase is an exchanging packet of SYNC signal and SFD, including:
   the first exchanging packet transmitted by the initiator to the responder carries one or more SYNC and SFD fragments to achieve time synchronization between the initiator and the responder.
3). The transmission and reception of subsequent exchanging packets in the ranging phase includes:
   set a ranging fragment period, each ranging fragment period includes two or more sub-periods, and data are transmitted and received with one or more UWB MMS fragments in each sub-period; and
   in each sub-period, the initiator transmits data once and receives data from some of all responders replying at different time points;
      and/or,
   in each sub-period, all responders receive data from the initiator once, and some of the responders transmit data to the initiator once at different time points.

Although the embodiments disclosed herein are as described above, the contents described herein are the embodiments merely for the purpose of facilitating understanding of the present application, and are not intended to limit the present application. Any person skilled in the art to which this application belongs may make any modifications and changes in the form and details of implementation without departing from the essence and scope disclosed herein, but the patent protection scope of the present application must still be subject to the scope defined by the appended claims.

## Claims

1. A ranging method, comprising:
transmitting, by a first UWB device performing UWB MMS ranging, one or more SYNC and SFD fragments to a second UWB device to achieve time synchronization between the first UWB device and the second UWB device.

2. The ranging method of claim 1, wherein transmitting the one or more SYNC and SFD fragments comprises:
during a ranging phase of the UWB MMS ranging, continuously exchanging one or more SYNC and SFD fragments between the first UWB device as an initiator and the second UWB device as a responder starting from a first fragment, wherein each fragment comprises one SYNC and SFD fragment.

3. The ranging method of claim 1, wherein transmitting the one or more SYNC and SFD fragments comprises:
during a ranging phase of the UWB MMS ranging, exchanging, by the first UWB device as an initiator and the second UWB device as a responder, a SYNC and SFD fragment using a first fragment.

4. The ranging method of claim 1, 2 or 3, wherein the UWB MMS ranging is UWB driven MMS ranging or out-of-band (OOB) assisted UWB MMS ranging.

5. The ranging method of claim 4, further comprising:
during a control phase of the UWB MMS ranging, exchanging, by the first UWB device and the second UWB device in an OOB way, auxiliary information for assisting the first UWB device and the second UWB device in determining to receive a SYNC and SFD fragment from each other during a ranging phase of the UWB MMS ranging.

6. The ranging method of claim 5, wherein the auxiliary information comprises one or any combination of the following:
time offset information that is used to determine a time offset at which the first UWB device and the second UWB device start receiving the first segment after entering the ranging phase of the UWB MMS ranging;
sequence configuration information that is used to determine an SYNC length, an SFD length, or a length of the SYNC and SFD fragment; and
correspondence in a time domain that is used to represent time correspondence between different time domains of the control phase and the ranging phase.

7. The ranging method of claim 6, wherein the sequence configuration information comprises a sequence length and a spreading factor.

8. The ranging method of claim 4, wherein an OOB frequency band is Bluetooth.

9. The ranging method of claim 4, wherein the OOB assisted UWB MMS ranging comprises:
OOB assisted one-to-one UWB MMS ranging, first OOB assisted one-to-many UWB MMS ranging, or second OOB assisted one-to-many UWB MMS ranging.

10. The ranging method of claim 3, wherein the OOB assisted UWB MMS ranging is a first OOB assisted one-to-one UWB MMS ranging;
exchanging, by the initiator and the responder, the SYNC and SFD fragment using the first fragment, comprises:
in the ranging phase of the UWB MMS ranging, transmitting, by the initiator, a first SYNC and SFD fragment as the first fragment to the responder; and
transmitting, by the responder, a second SYNC and SFD fragment as the first fragment to the initiator.

11. The ranging method of claim 10, further comprising:
in a control phase of the UWB MMS ranging, transmitting, by the initiator, first auxiliary information to the responder via a Bluetooth connection, and transmitting, by the responder, second auxiliary information to the initiator.

12. The ranging method of claim 3, wherein the OOB assisted UWB MMS ranging is first OOB assisted one-to-many UWB MMS ranging;
a first OOB assisted one-to-many UWB MMS ranging process comprises a plurality of OOB assisted one-to-one UWB MMS ranging processes;
for each one-to-one UWB MMS ranging process, exchanging the SYNC and SFD fragment using the first fragment, comprising:
transmitting, by the initiator, a first SYNC and SFD fragment as the first fragment to the responder; and
transmitting, by the responder, a second SYNC and SFD fragment as the first fragment to the initiator.

13. The ranging method of claim 12, further comprising:
in a control phase of the UWB MMS ranging, transmitting, by the initiator, first auxiliary information to the responder via a Bluetooth connection, and transmitting, by the responder, second auxiliary information to the initiator via a Bluetooth connection.

14. The ranging method of claim 3, wherein the OOB assisted UWB MMS ranging is a second OOB assisted one-to-many UWB MMS ranging;
for each sub-ranging round, exchanging the SYNC and SFD fragment using the first fragment comprises:
transmitting, by the initiator, the SYNC and SFD fragment to all responders in the current sub-ranging round using the first fragment during a ranging phase of the current sub-ranging round in the UWB MMS ranging, and
transmitting, by the responders in the current sub-ranging round, individual SYNC and SFD fragments to the initiator as individual first fragments, respectively;
wherein each sub-ranging round comprises one initiator and one or more responders.

15. The ranging method of claim 14, wherein for each sub-ranging round, the ranging method further comprises:
advertising, by the initiator, first auxiliary information of the initiator via a Bluetooth connection in a control phase of UWB MMS ranging;
wherein each responder in the current sub-ranging round transmits individual auxiliary information to the initiator, respectively.

16. The ranging method of claim 1, 2 or 3, wherein after time synchronization between the first UWB device and the second UWB device is achieved, the ranging method further comprises:
performing, by the first UWB device as the initiator and the second UWB device as the responder, ranging segment exchanging to implement ranging.

17. The ranging method of claim 16, wherein for the initiator, performing the ranging fragment exchanging comprises:
transmitting, by the initiator, one RSF fragment at time points with every interval of a preset duration from starting of a ranging phase, respectively, until a first preset number of RSF fragments are transmitted; and transmitting, by the initiator, one RIF fragment at twice the preset duration after a last RSF fragment is transmitted and at time points with every interval of the preset duration from twice the preset duration after the last RSF fragment is transmitted, respectively, until a second preset number of RIF fragments are transmitted; or
transmitting, by the initiator, one RIF fragment at time points with every interval of a preset duration from starting of the ranging phase, respectively, until the second preset number of RIF fragments are transmitted.

18. The ranging method of claim 16, wherein for the responder, performing the ranging fragment exchanging comprises:
transmitting, by the responder, one RSF fragment at 1.5 times a preset duration from starting of a ranging phase and time points with every interval of the preset duration from 1.5 times the preset duration, respectively, until a first preset number of RSF fragments are transmitted; and transmitting, by the responder, one RIF fragment at twice the preset duration after a last RSF fragment is transmitted and at time points with every interval of the preset duration from twice the preset duration after the last RSF fragment is transmitted, respectively, until a second preset number of RIF fragments are transmitted; or
transmitting, by the responder, one RIF fragment at 1.5 times the preset duration from the starting of the ranging phase and time points with every interval of the preset duration from the 1.5 times the preset duration, respectively, until the second preset number of RIF fragments are transmitted.

19. A ranging apparatus, comprising a synchronization module configured to:
transmit one or more SYNC and SFD fragments from a first UWB device performing UWB MMS ranging to a second UWB device to achieve time synchronization between the first UWB device and the second UWB device.

20. The ranging apparatus of claim 19, wherein the synchronization module is configured to:
continuously transmit the one or more SYNC and SFD fragments starting from a first fragment in a ranging phase of the UWB MMS ranging, wherein each fragment comprises one SYNC and SFD fragment.

21. The ranging apparatus of claim 19, wherein the synchronization module is configured to:
transmit a SYNC and SFD fragment using a first fragment in a ranging phase of the UWB MMS ranging.

22. The ranging apparatus of claim 19, wherein the UWB MMS ranging is UWB driven MMS ranging or out-of-band (OOB) assisted UWB MMS ranging.

23. The ranging apparatus of claim 19, further comprising a control module configured to, during a control phase of the UWB MMS ranging, transmit, in an OOB way, auxiliary information for assisting both devices for performing the UWB MMS ranging in determining to receive a SYNC and SFD fragment from a peer device in a ranging phase.

24. The ranging apparatus of claim 19, further comprising: a ranging module configured to perform ranging fragment exchanging to implement ranging.

25. The ranging apparatus of claim 23, wherein the OOB assisted UWB MMS ranging is OOB assisted one-to-one UWB MMS ranging, and the ranging apparatus is an initiator/responder for the UWB MMS ranging;
the synchronization module is configured to transmit a first SYNC and SFD fragment as a first fragment to the initiator/responder in the ranging phase;
the control module is configured to transmit first auxiliary information/second auxiliary information to the responder/initiator via a Bluetooth connection in the control phase.

26. The ranging apparatus of claim 23, wherein the OOB assisted UWB MMS ranging is a first OOB assisted one-to-many UWB MMS ranging; the ranging apparatus is an initiator/responder for the UWB MMS ranging;
the synchronization module is configured to:
transmit a first SYNC and SFD fragment as a first fragment to the responder/initiator for each one-to-one UWB MMS ranging process; wherein each one-to-one UWB MMS ranging comprises the initiator and one of responders;
the control module is configured to:
transmit first auxiliary information/second auxiliary information to the responder/initiator via a Bluetooth connection in the control phase.

27. The ranging apparatus of claim 23, wherein the OOB assisted UWB MMS ranging is a second OOB assisted one-to-many UWB MMS ranging; the ranging apparatus is an initiator/responder for the UWB MMS ranging;
the synchronization module is configured to:
for each sub-ranging round, transmit the SYNC and SFD fragment from the initiator to all responders in the current sub-ranging round using a first fragment during the ranging phase of the current sub-ranging round in the UWB MMS ranging, and transmit individual SYNC and SFD fragments from the responders in the current sub-ranging round to the initiator as the individual first fragments, respectively; wherein each sub-ranging round comprises one initiator and one or more responders;
the control module is configured to:
for each sub-ranging round, advertise from the initiator first auxiliary information of the initiator via a Bluetooth connection in the control phase; wherein each responder in the current sub-ranging round transmits individual auxiliary information to the initiator, respectively.

28. The ranging apparatus of claim 24, wherein the ranging apparatus is the initiator, and the ranging module is configured to:
starting at a preset duration from the starting of the ranging phase, transmit one RSF fragment every interval of the preset duration until a first preset number of RSF fragments are transmitted; and starting at twice the preset duration after the transmission of a last RSF fragment starts, transmit one RIF fragment every interval of the preset duration until a second preset number of RIF fragments are transmitted; or
starting at a preset duration from the starting of the ranging phase, transmit one RIF fragment every interval of the preset duration until a second preset number of RIF fragments are transmitted.

29. The ranging apparatus of claim 24, wherein the ranging apparatus is the responder, and the ranging module is configured to:
transmit one RSF fragment at time points with every interval of the preset duration from starting of a ranging phase, respectively, until a first preset number of RSF fragments are transmitted; and transmit one RIF fragment at twice the preset duration after a last RSF fragment is transmitted and at time points with every interval of the preset duration from twice the preset duration after the last RSF fragment is transmitted, respectively, until a second preset number of RIF fragments are transmitted; or
transmit one RIF fragment at time points with every interval of a preset duration from starting of the ranging phase, respectively, until the second preset number of RIF fragments are transmitted.

30. A UWB device, comprising the ranging apparatus of any one of claims 19 to 29.

31. A UWB system, comprising at least one first UWB device, and two or more second UWB devices; wherein
the first UWB device is configured to transmit one or more SYNC and SFD fragments, starting from a first fragment in a ranging phase of the UWB MMS ranging to achieve time synchronization with the second UWB device;
the second UWB device is configured to transmit one or more SYNC and SFD fragments, starting from a first fragment in the ranging phase of the UWB MMS ranging to achieve time synchronization with the first UWB device.

32. A ranging method, comprising:
setting a ranging fragment period, wherein each ranging fragment period comprises two or more sub-periods, and transmitting and receiving data using one or more UWB MMS fragments in each sub-period;
performing data transmission and reception by an initiator for ranging within a ranging fragment period, comprising:
in each sub-period, transmitting, by the initiator, data once, and receiving, by the initiator, data from some of all responders replied at different time points.

33. The ranging method of claim 32, wherein the all responders comprise two or more responders.

34. The ranging method of claim 33, wherein each ranging fragment period comprises two sub-periods;
performing, by the initiator for the ranging, the data transmission and reception within a ranging fragment period, comprising:
in one of the sub-periods, transmitting, by the initiator, data once and receiving, by the initiator, data replied from some responders at different time points; in another sub-period, transmitting, by the initiator, data once and receiving, by the initiator, data replied from remaining responders at different time points.

35. The ranging method of claim 34, wherein the some responders comprise m responders; and the remaining responders comprise (n - m) responders;
where n is a number of responders; m=n and n =2, or $m = \frac{n}{2}$ and n is an even number greater than 2, or $m = \frac{n + 1}{2}$ or $m = \frac{n - 1}{2}$ and n is an odd number greater than or equal to 3.

36. The ranging method of any one of claims 32 to 35, wherein the ranging fragment periods comprise one or more; one or more of the ranging fragment periods constitute a ranging phase.

37. The ranging method of any one of claims 32 to 35, wherein the UWB MMS fragment comprises a ranging sequence fragment RSF and/or a ranging integrity fragment RIF.

38. The ranging method of any one of claims 32 to 35, wherein the ranging fragment period comprises a ranging sequence fragment period and/or a ranging integrity fragment period.

39. The ranging method of claim 38, further comprising:
for the ranging fragment period including a plurality of fragments, performing, by the initiator, channel impulse response combination according to ranging sequence fragments transmitted by a same responder and received by the initiator during a plurality of ranging sequence fragment periods; and/or,
for the ranging integrity fragment period including a plurality of fragments, performing, by the initiator, channel impulse response combination according to ranging integrity fragments transmitted by a same responder and received by the initiator during a plurality of ranging integrity fragment periods.

40. The ranging method of claim 37, wherein if there are odd number of responders, one more RSF/RIF in one sub-period of the ranging fragment period than those in the another sub-period for the initiator, and one fragment in the another sub-period is one dummy fragment.

41. The ranging method of any one of claims 32 to 35, wherein the ranging fragment period is one or more ranging slots.

42. The ranging method of any one of claims 32 to 35, wherein a sub-period is one ranging slot that has a configurable length.

43. The ranging method of claim 42, wherein the sub-period is greater than or equal to 1 millisecond.

44. The ranging method of claim 43, wherein the ranging fragment period is two milliseconds, and the sub-period is one millisecond.

45. The ranging method of claim 44, wherein the initiator transmits data once at starting of an indicated 1 ms within the sub-period.

46. The ranging method of any one of claims 32 to 35, further comprising: in a ranging initialization phase, a ranging initialization message transmitted by the initiator carries one or more pieces of the following information: a number of responders; a start slot index which is set as a start slot index for the ranging phase; and a list of the responders, respective addresses of the responders, and sequence numbers indicating orders of packets transmitted by the responders.

47. A ranging method, comprising: setting a ranging fragment period, wherein each ranging fragment period includes two or more sub-periods, and transmitting and receiving data with one or more UWB MMS fragments in each sub-period;
performing data transmission and reception, by a responder for the ranging, within a ranging fragment period, comprising:
in each sub-period, receiving, by all responders, data from the initiator once, and transmitting, by some of all the responders, data to the initiator once at different time points.

48. The ranging method of claim 47, wherein all the responders comprise two or more responders.

49. The ranging method of claim 48, wherein each of the ranging fragment periods comprises two sub-periods;
performing the data transmission and reception, by the responder for the ranging, within the ranging fragment period comprises:
in one of the sub-periods, receiving, by all responders, data from the initiator once, and transmitting, by some of all the responders, data to the initiator once at different time points; in another sub-period, receiving, by all the responders, data from the initiator once, and transmitting, by remaining responders, data to the initiator once at different time points.

50. The ranging method of claim 48, wherein the some of all the responders comprise m responders; and the remaining responders comprise (n - m) responders;
where n is a number of all the responders; m = n and n = 2, or $m = \frac{n}{2}$ and n is an even number greater than 2, or $m = \frac{n + 1}{2}$ or $m = \frac{n - 1}{2}$ and n is an odd number greater than or equal to 3.

51. The ranging method of claim 48 or 49, wherein the ranging fragment periods comprise one or more; one or more ranging fragment periods constitute a ranging phase.

52. The ranging method of claim 48, 49 or 50, wherein the UWB MMS fragment comprises a ranging sequence fragment, RSF, and/or a ranging integrity fragment, RIF.

53. The ranging method of any one of claims 47 to 49, wherein the ranging fragment period comprises a ranging sequence fragment period and/or a ranging integrity fragment period.

54. The ranging method of claim 53, further comprising:
for the ranging fragment period including a plurality of fragments, performing, by the responder, channel impulse response combination according to ranging sequence fragments transmitted by a same initiator and received by the responder during the plurality of ranging sequence fragment periods, RSFs; and/or,
for the ranging integrity fragment period including a plurality of fragments, performing, by the responder, channel impulse response combination according to the ranging integrity fragments, RIFs, transmitted by a same initiator and received by the responder during the plurality of ranging integrity fragment periods.

55. The ranging method of any one of claims 48 to 50, wherein the ranging fragment period is one or more ranging slots.

56. The ranging method of any one of claims 48 to 50, wherein a sub-period is one ranging slot that has a configurable length.

57. The ranging method of claim 56, wherein the sub-period is greater than or equal to 1 millisecond.

58. The ranging method of claim 57, wherein the ranging fragment period lasts for two milliseconds, and the sub-period lasts for one millisecond.

59. The ranging method of claim 48 or 49, further comprising:
in a ranging initialization phase, receiving, by the responders, a ranging initialization message from the initiator, and transmitting data to the initiator at corresponding time points in time according to a start slot index and a sequence number carried in the ranging initialization message.

60. A ranging method, comprising a first UWB device as an initiator for ranging and n second UWB devices as responders for ranging, n being an integer greater than or equal to 2; setting a ranging fragment period comprising two sub-periods, and transmitting and receiving data in each sub-period using one or more UWB MMS fragments;
performing data transmission and reception within a ranging fragment period comprise:
in one of the sub-periods, transmitting, by the first UWB device, data once and receiving data replied from some of the second UWB devices at different time points, receiving, by the n second UWB devices, data from the first UWB device once, and transmitting, by the some of the second UWB devices, data to the first UWB device once at different time points, and
in the other sub-period, transmitting, by the first UWB device, data once and receiving data responded from the remaining second UWB devices at different time points, receiving, by the n second UWB devices, data from the first UWB device once, and transmitting, by remaining responders, data to the first UWB device once at different time points.

61. The ranging method of claim 60, wherein the some responders comprise m responders; and the remaining responders comprise (n - m) responders;
where m = n and n = 2, or $m = \frac{n}{2}$ and n is an even number greater than 2, or $m = \frac{n + 1}{2}$ or $m = \frac{n - 1}{2}$ and n is an odd number greater than or equal to 3.

62. The ranging method of claim 60, wherein in one of the sub-periods, ranging data are transmitted and received between the first UWB device and the m second UWB devices in a data transmission and reception mode of Double-Sided Two-Way Ranging (DS-TWR); and
in the other sub-period, ranging data are transmitted and received between the first UWB device and the remaining (n - m) second UWB devices in a data transmission and reception mode of ess-TWR.

63. The method of claim 62, wherein for any second UWB device among the m second UWB devices, transmitting and receiving the ranging data in the data transmission and reception mode of DS-TWR comprises:
transmitting, by the first UWB device, first ranging data, receiving, by the second UWB device, the first ranging data and responding to the first UWB device with ranging data, and receiving, by the first UWB device, the responded ranging data; transmitting, by the first UWB device, second ranging data, and receiving, by the second UWB device, the second ranging data;
for any second UWB device among the remaining (n - m) second UWB devices, transmitting and receiving the ranging data in the data transmission and reception mode of ess-TWR comprises:
transmitting, by the first UWB device, first ranging data, and receiving, by the second UWB device, the first ranging data; transmitting, by the first UWB device, second ranging data, receiving, by the second UWB device, the second ranging data and responds to the first UWB device with ranging data, and receiving, by the first UWB device, the responded ranging data.

64. The method of claim 63, wherein performing the data transmission and reception comprises:
during a sub-period of the ranging fragment period, transmitting, by the first UWB device, the first ranging data and receiving the ranging data responded from the m second UWB devices, respectively; receiving, by the n second UWB devices each, the first ranging data transmitted from the first UWB device, and responding, by the m second UWB devices, to the first UWB device with ranging data, respectively; and
during the other sub-period of the ranging fragment period, transmitting, by the first UWB device, the second ranging data and receiving the ranging data responded from (n - m) remaining second UWB devices, respectively; receiving, by the n second UWB devices each, the second ranging data transmitted from the first UWB device, and responding, by the (n - m) remaining second UWB devices, to the first UWB device with ranging data, respectively.

65. The ranging method of any one of claims 60 to 64, wherein the ranging fragment periods comprise one or more; one or more ranging fragment periods constitute a ranging phase.

66. The ranging method of claim 65, wherein the ranging fragment period is one or more ranging slots, or a sub-period has a configurable ranging slot.

67. The ranging method of claim 66, wherein the ranging fragment period lasts for two milliseconds, and the sub-period lasts for one millisecond.

68. The ranging method of claim 63 or 64, further comprising: performing ranging according to time of flight determined by time information of the ranging data transmission and reception.

69. The ranging method of claim 68, wherein for a part of the data transmission and reception in a data transmission and reception mode of TxTxRx-RxRxTx, a second time of flight Tₚᵣₒₚ₂ is calculated according to: ${T}_{prop 2} = \frac{{T}_{round 1} - {T}_{reply 1} \times \left(1+δ\right)}{2} ;$ where $\left(1+δ\right) = \frac{{T}_{round 1} - {T}_{round 2}}{{T}_{reply 1} - {T}_{reply 2}}$; a fifth time difference T_{reply3} represents a time length from receiving the first ranging data to responding to the first UWB device with ranging data by the second UWB device; a sixth time difference T_{reply4} represents a time length from receiving the second ranging data to responding to the first UWB device with ranging data by the second UWB device; a seventh time difference T_{round3} represents a time length from transmitting the first ranging data to receiving ranging data responded from the second UWB device by the first UWB device; and an eighth time difference T_{round4} represents a time period from transmitting the second ranging data to receiving ranging data responded from the second UWB device by the second UWB device.

70. A ranging apparatus, comprising: a setting module and a ranging module; wherein
in a case where the ranging apparatus is disposed at an initiator for the ranging,
the setting module is configured to set a ranging fragment period to comprise a first sub-period and a second sub-period, and transmit and receive data with one or more UWB MMS fragments in each sub-period;
the ranging module is configured to in the first sub-period, transmit data once by the initiator, and receive data replied from some responders at different time points; and in the second sub-period, transmit data once by the initiator, and receive data replied from remaining responders at different time points; wherein there are two or more responders;
in a case where the ranging apparatus is disposed at responders for the ranging,
the setting module is configured to set a ranging fragment period to comprise a first sub-period and a second sub-period, and transmit and receive data with one or more UWB MMS fragments in each sub-period;
the ranging module is configured to in the first sub-period, receive, by some responders, data from the initiator once, and transmit the data to the initiator once at different time points; and in the second sub-period, receive data, by remaining responders, from the initiator once, and transmit the data to the initiator once at different time points in time; wherein there are two or more responders.

71. The ranging apparatus of claim 70, wherein the some responders comprise m responders; and the remaining responders comprise (n - m) responders;
where n is a number of or responders; m = n and n = 2, or $m = \frac{n}{2}$ and n is an even number greater than 2, or $m = \frac{n + 1}{2}$ or $m = \frac{n - 1}{2}$ and n is an odd number greater than or equal to 3.

72. The ranging method of claim 70 or 71, further comprising a processing module configured to perform ranging according to time of flight determined by time information of the ranging data transmission and reception.

73. A UWB device, comprising the ranging apparatus of any one of claims 70 to 72.

74. A UWB system, comprising at least one initiator, and two or more responders;
performing, by the at least one initiator, data transmission and reception within a ranging fragment period, comprising: in each sub-period, the initiator transmits data once and receives data replied from some of all the responders at different time points;
performing, by the two or more responders, data transmission and reception within the ranging fragment period, comprising: in each sub-period, all the responders receive data from the initiator once, and some of all the responders transmit data to the initiator once at different time points;
wherein each ranging fragment period includes two or more sub-periods, and in each sub-period, data is transmitted and received using one or more UWB MMS fragments.

75. A ranging method, applied to a UWB ranging system, wherein the UWB ranging system includes an initiator and a responder, and the initiator and the responder store a same plurality of short-term operating parameter sets;
during a ranging session, negotiating, by the initiator, with the responder a same short-term operating parameter set used in at least one round of UWB ranging exchanging, wherein negotiating, by the UWB initiator, with the responder the same short-term operating parameter set used in the at least one round of UWB ranging exchanging, includes:
indicating, by the initiator, a short-term operating parameter set to the responder; and/or,
requesting, by the responder, the initiator for a short-term operating parameter set, or short-term operating parameters conforming to at least one short-term operating parameter set.

76. The method of claim 75, further comprising: feeding back, by the responder, information indicating an available short-term operating parameter set to determine a negotiated short-term operating parameter set that will be used in a corresponding round of the UWB ranging exchanging.

77. The method of claim 76, wherein during a report phase of the ranging session, the responder feeds back the information of the available short-term operating parameter set to determine the negotiated short-term operating parameter set that will be used in the corresponding round of the UWB ranging exchanging.

78. The method of claim 75, wherein different indices are associated with different short-term operating parameter sets, and the initiator and/or the responder negotiates by exchanging with indices of the short-term operating parameter sets.

79. The method of claim 75, wherein different short-term operating parameters are associated with different indices, and the initiator and/or the responder negotiates by exchanging with indices of the short-term operating parameters or indices of short-term operating parameters included in the short-term operating parameter sets.

80. The method of claim 75, further comprising: acquiring and storing, by the initiator and the responder, the same plurality of short-term operating parameter sets by utilizing an SOR frame transmitted by the initiator and/or an RESP frame transmitted by the responder.

81. The method of claim 75, wherein the initiator and the responder negotiate the short-term operating parameter sets by using UWB narrowband communication, UWB communication, or out-of-band communication.

82. The method of claim 75, wherein a single short-term operating parameter set comprises short-term operating parameters used by the initiator and the responder when exchanging is performed between the initiator and the responder in at least one of a control phase, a ranging phase and a report phase of the ranging session.

83. The method of claim 75, wherein the initiator negotiates the short-term operating parameter sets with the responder in a control phase of the ranging session.

84. The method of claim 75, wherein the at least one round of UWB ranging exchanging is a next round of UWB ranging exchanging.

85. A ranging method comprising:
in a ranging control phase, negotiating, by the initiator with the responder a same short-term operating parameter set used in at least one round of UWB ranging exchanging, wherein negotiating, by the initiator, with the responder the same short-term operating parameter set used in the at least one round of UWB ranging exchanging, comprises: indicating, by the initiator, one short-term operating parameter set to the responder; and/or requesting, by the responder, the initiator for a short-term operating parameter set, or short-term operating parameters conforming to at least one short-term operating parameter set; wherein the initiator and the responder store a same plurality of short-term operating parameter sets;
wherein in a ranging phase, a first exchanging packet transmitted by the initiator to the responder carries one or more SYNC and SFD fragments to implement time synchronization between the initiator and the responder.

86. A ranging method, comprising: setting a ranging fragment period, wherein each ranging fragment period comprises two or more sub-periods, and transmitting and receiving data with one or more UWB MMS fragments in each sub-period;
in a ranging control phase, negotiating, by the initiator, with the responder a same short-term operating parameter set used in at least one round of UWB ranging exchanging, wherein negotiating, by the initiator, with the responder the same short-term operating parameter set used in the at least one round of UWB ranging exchanging, comprises: indicating, by the initiator, one short-term operating parameter set to the responder; and/or requesting, by the response, the initiator for a short-term operating parameter set, or short-term operating parameters conforming to at least one short-term operating parameter set.; wherein the initiator and the responder store a same plurality of short-term operating parameter sets;
wherein in a ranging phase, a first exchanging packet transmitted by the initiator to the responder carries one or more SYNC and SFD fragments to implement time synchronization between the initiator and the responder;
transmission and reception of subsequent exchanging packets in the ranging phase comprises:
in each sub-period, transmitting, by the initiator, data once and receiving data from some of all responders replying at different time points;
and/or,
in each sub-period, receiving, by all the responders, data from the initiator once, and transmitting, by some of the responders, data to the initiator once at different time points.
